(19) Europäisches Patentamt
European Patent Office
Office européen des brevets

(11) Numéro de publication : **0 466 543 B1**

(12) **FASCICULE DE BREVET EUROPEEN**

(45) Date de publication du fascicule du brevet :
**08.11.95 Bulletin 95/45**

(51) Int. Cl.⁶ : **H04Q 7/36, H04B 7/26**

(21) Numéro de dépôt : **91401714.0**

(22) Date de dépôt : **26.06.91**

(54) **Régulation de la charge de stations fixes dans un réseau de radiocommunication cellulaire.**

(30) Priorité : **12.07.90 FR 9008886**

(43) Date de publication de la demande :
**15.01.92 Bulletin 92/03**

(45) Mention de la délivrance du brevet :
**08.11.95 Bulletin 95/45**

(84) Etats contractants désignés :
**DE GB**

(56) Documents cités :
**EP-A- 0 182 027**
**EP-A- 0 236 194**
**US-A- 4 435 840**
**US-A- 4 670 899**

(56) Documents cités :
**IEE PROCEEDINGS -F/COMMUNICATIONS ,
RADAR AND SIGNAL PROCESSING vol. 134,
no.1, Février 1987, STEVENAGE GB pages 85 -
88; D.MUNOZ-RODRIGUEZ: 'Multiple criteria
for hand-off in cellular mobile radio '**

(73) Titulaire : **FRANCE TELECOM
Exploitant Autonome de Droit Public,
6, Place d'Alleray
F-75015 Paris (FR)**

(72) Inventeur : **Charbonnier, Alain
13 rue Saint-Symphorien
F-78000 Versailles (FR)**

(74) Mandataire : **Cabinet Martinet & Lapoux
BP 405
F-78055 Saint Quentin en Yvelines Cédex (FR)**

EP 0 466 543 B1

## Description

La présente invention concerne la régulation de la charge de trafic, de stations fixes dites également relais, dans un réseau de radiocommunication cellulaire. Corollairement, cette régulation conditionne la sélection d'une station fixe par une station mobile.

Un système de radiocommunication comporte typiquement les éléments suivants :

- Des stations mobiles qui incluent en particulier un émetteur-récepteur radio, sélectionnent l'un des relais radio dès la mise sous tension, échangent des informations numériques avec le relais, sélectionnent un canal radio de ce relais, établissent et reçoivent des communications télphoniques de départ et d'arrivée via le relais ; et
- Un réseau fixe de communication constitué par :
  * des stations de radio fixes, qui gèrent chacune un ensemble de canaux radio dont un ou plusieurs canaux radio de signalisation pour échanger des informations numériques avec les stations mobiles, et des protocoles d'interface pour établir des communications entre le réseau téléphonique et les stations mobiles ; et
  * une infrastructure comportant des calculateurs, des commutateurs, et des moyens de transport d'informations numériques et de signaux téléphoniques, afin de mettre en oeuvre des fonctions de commutation, de localisation des stations mobiles dans le réseau, d'exploitation, et d'optimisation de la charge de trafic dans le réseau.

Les réseaux les plus récents à fort trafic sont constitués d'un grand nombre de stations fixes, chaque station fixe couvrant une petite zone géographique. La couverture radioélectrique d'une station fixe est alors appelée "cellule", et le réseau est qualifié de "cellulaire".

Les ressources radioélectriques étant limitées, il est particulièrement important de gérer le réseau de manière à répartir la charge en trafic entre les canaux radio, et donc entre les stations fixes.

Dans les réseaux cellulaires les plus récents tels que le système RADIOCOM 2000 et le système Pan-Européen GSM, certains moyens sont prévus pour agir sur la charge radio. Ils peuvent être classés dans les catégories suivantes :

- Lorsqu'un relais a son trafic saturé, il diffuse une information de saturation, en général binaire, qui interdit ou dissuade fortement les stations mobiles de sélectionner ce relais. L'envoi de cette information est déclenché automatiquement par la station fixe ou par l'infrastructure dans les cas de perturbation grave du fonctionnement.

  Par exemple, le US-A-4 435 840 décrit un réseau cellulaire de radiocommunication dans lequel un paramètre binaire prend l'une de deux valeurs selon qu'il y ait saturation ou non du trafic dans une station fixe. Ce paramètre dépendant de la saturation de la station fixe est transmis vers les stations mobiles et maintient un niveau de référence dans les stations mobiles lorsqu'il n'y a aucune saturation et augmente le niveau de référence à une seconde valeur dès qu'il y a saturation de trafic dans la station fixe.

  Une station mobile compare alors le champ radioélectrique émis par la station fixe avec le niveau de référence maintenu ou augmenté et est connectable à la station fixe si le champ radioélectrique émis par la station fixe est supérieur au niveau de référence maintenu ou augmenté. Ce procédé est fondé sur la saturation préalable des stations fixes qui est préjudiciable au bon fonctionnement du réseau de radiocommunication.

  Ce type de moyens ne peut pas être utilisé pour réaliser une optimisation efficace de la charge radio.

- Les réseaux cellulaires offrent la fonction de transfert de la station mobile entre deux cellules sans interruption de la communication. Pour certains systèmes, il est prévu qu'en cas de charge importante d'une station fixe, la station mobile puisse être transférée vers une autre cellule au moment de l'établissement de la communication ou pendant la communication. On note en effet que l'essentiel de la charge des canaux radioélectriques est dû aux communications téléphoniques.

  Cette seconde solution présente les inconvénients suivants :

- Complexité : le processus de décision de transfert de la station mobile prend en compte un grand nombre de paramètres dont des mesures radioélectriques effectuées dans les relais voisins et le degré de saturation de ces relais. C'est un processus temps réel dont la durée doit être faible, de quelques secondes. Ce mécanisme est donc difficile à réaliser et à optimiser.
- Dégradation de la qualité de la communication : tout transfert de station mobile se traduit très fréquemment par une dégradation audible, ou un retard dans l'établissement de la communication.

L'invention vise à répartir la charge radioélectrique d'un réseau cellulaire entre ses diverses stations fixes et ainsi à réguler les nombres variables de stations mobiles assignées respectivement aux stations fixes. En d'autres termes, l'invention cherche à réguler le trafic de chaque station fixe par le biais d'une variation de la "surface" de la cellule contenant la station fixe, indépendamment d'une quelconque variation de puissance d'émission des stations.

A cette fin, un procédé pour réguler la charge de stations fixes dans un réseau de radiocommunication cellulaire où des stations mobiles mesurent des champs radioélectriques émis par les stations fixes,

selon lequel, relativement à une station fixe associée à l'une des cellules du réseau,

un paramètre dépendant du trafic écoulé de la station fixe et réévalué périodiquement est transmis vers les stations mobiles,

caractérisé en ce que ledit paramètre est un paramètre de correction de champ dépendant d'un indicateur de charge de la station fixe et d'un indicateur de charge de voisinage réévalué périodiquement, qui est une combinaison

d'un indicateur de surcharge relatif à des stations fixes voisines de ladite station fixe et

d'un indicateur de déplacement relatif à des frontières de champ entre les cellules correspondant aux stations voisines et la cellule de ladite station fixe,

une frontière entre deux cellules étant déterminée par une égalité de champs corrigés correspondant auxdites deux cellules et étant déplacée en fonction des variations des paramètres de correction desdites deux cellules, et

en ce que dans chacune des stations mobiles le champ radioélectrique mesuré correspondant à la station fixe est corrigé par le paramètre de correction en un champ corrigé, afin que la station mobile compare les champs corrigés correspondant aux stations fixes et sélectionne la station fixe correspondant au champ corrigé le plus élevé pour établir une radiocommunication.

Ainsi, selon l'invention, par exemple plus le nombre de stations mobiles ayant sélectionné une station fixe est élevé, plus le paramètre de correction est grand, ce qui diminue le champ mesuré corrigé par les stations mobiles et donc le nombre de stations mobiles sélectionnant la station fixe et le trafic affecté à celle-ci.

Si une station fixe fonctionne avec un trafic faible à un instant donné, elle est susceptible d'absorber automatiquement une partie du trafic élevé d'une station fixe voisine, par "élargissement" de la surface de couverture de la cellule de ladite station fixe se traduisant par une diminution du paramètre de correction de champ de cette station fixe.

Selon l'invention, au moment de la sélection d'une station fixe par une station mobile, le système fixe de communication agit afin de répartir les stations mobiles entre les stations fixes suivant la charge des stations fixes. Ainsi, par effet statistique, ce mécanisme régule la charge radio due aux communications. Le processus de régulation est plus simple et fonctionne avec des constantes de temps longues comparativement aux processus de transfert de cellule selon la technique antérieure. Il est efficace parce que bien adapté à une géographie cellulaire du réseau.

Les calculs de paramètres et indicateurs peuvent être effectués pour partie localement dans les stations fixes, et pour partie dans des moyens centralisés, tels qu'un centre de gestion et de maintenance relié aux stations fixes par lignes téléphoniques spécialisées. Toutefois, selon une autre variante, la plupart des calculs peuvent être effectués dans des moyens centralisés.

D'autres caractéristiques de la présente invention apparaîtront plus clairement à la lecture de la description suivante de plusieurs réalisations préférées de l'invention en référence aux dessins annexés correspondants dans lesquels :

- la Fig. 1 est un bloc diagramme schématique d'un réseau de radiocommunication cellulaire pour la mise en oeuvre du procédé selon l'invention ;
- la Fig. 2 est un bloc diagramme détaillé d'une unité de gestion de relais inclus dans le réseau montré à la Fig. 1.
- la Fig. 3 est un bloc diagramme schématique d'un centre de gestion et de maintenance de relais inclus dans le réseau montré à la Fig. 1 ;
- la Fig. 4 est un graphe pour expliquer la sélection d'un relais par un mobile et la définition de la frontière entre deux cellules voisines du réseau ;
- la Fig. 5 est un bloc diagramme schématique d'une station mobile ;
- la Fig. 6 est bloc diagramme de principe pour expliquer la régulation du trafic des relais, et plus particulièrement l'asservissement des paramètres de correction de champ à la charge des relais ;
- la Fig. 7 est un bloc diagramme schématique d'un automate local de régulation de charge pour un relais donné selon une première réalisation de l'invention ;
- la Fig. 8 montre sous la forme d'un algorithme schématique un module de mesure de charge de trafic inclus dans une unité de gestion de relais selon la Fig. 7 ;
- la Fig 9 montre sous la forme d'un algorithme schématique un module de calcul de paramètre de correction de champ radioélectrique inclus dans l'unité de gestion de relais selon la Fig. 7 ;

- la Fig 10 est un bloc diagramme schématique d'un automate de régulation de charge pour tous les relais du réseau cellulaire, selon une seconde réalisation de l'invention ;
- la Fig. 11 est un bloc diagramme détaillé d'un module de calcul des indicateurs de charge de voisinage inclus dans le centre de gestion et de maintenance selon la Fig. 10 ;
- la Fig 12 montre sous la forme d'un algorithme schématique un module d'indicateurs de surcharge de cellules voisines pour une cellule donnée du réseau, inclus dans le module de calcul montré à la Fig. 11 ;
- la Fig. 13 montre sous la forme d'un algorithme schématique un module de calcul de l'indicateur de déplacement de frontière pour une cellule donnée, inclus dans le module de calcul selon la Fig. 11 ; et
- la Fig 14 est un bloc diagramme schématique montrant des moyens centralisés de calcul dans le centre de gestion et de maintenance.

Afin de fixer les idées, on se réfère dans la suite à titre d'exemple à un réseau de radiocommunication cellulaire dont les caractéristiques principales sont présentées ci-après.

La couverture radioélectrique du réseau est composée de 256 canaux radioélectriques bidirectionnels, duplex ou éventuellement à l'alternat. Chaque canal est constitué d'une première voie ayant une largeur de bande de fréquence 12,5 kHz pour convoyer des signaux d'une station fixe, appelée relais, vers une station mobile, appelée mobile, et d'une seconde voie ayant une largeur de bande de fréquence de 12,5 kHz pour convoyer des signaux d'un mobile vers un relais. Les bandes des premières voies sont accolées à une bande de fréquence porteuse de largeur $12,5*256 =3200$ kHz, tout comme les bandes des secondes voies en une autre bande de 3200 kHz. Les deux bandes de fréquence porteuse sont centrées entre 400 MHz et 900 MHz.

Le réseau comporte $I = 40$ cellules $CE_1$ à $CE_{40}$ ayant chacune une aire de 10 à 40 km$^2$ environ. Les cellules sont souvent réunies en groupes de cellules adjacentes appelées"zones de localisation". Chaque cellule contient un relais, de préférence sensiblement au centre de la cellule, qui est associée à 10 à 50 canaux respectifs. Aux heures de consommation téléphonique élevée, le réseau dessert $40*10 = 400$ à $40*50 = 2000$ mobiles.

Un canal radio peut transmettre de la signalisation avec une modulation à déplacement de fréquence FFSK relative à une sous-porteuse de 1500 Hz +/-300 Hz pour les première et seconde voies et un débit de 1200 bits. Par exemple, un message est composé de trames ayant une durée de 173 ms et offrant une longueur utile respectivement de 64 bits dans le sens mobile vers relais, et de 80 bits dans le sens relais vers mobile, après extraction de champs de synchronisation et de décodage d'erreur. Dans le sens relais vers mobile, 16 bits de chaque trame sont utilisés pour diffuser vers le mobile des informations dites "de veille" qui sont des caractéristiques du relais, telles qu'état de fonctionnement du relais, zone de taxation, etc.

Un canal radio peut également transmettre classiquement un signal de phonie ou de données au cours d'une communication téléphonique établie.

Pour chaque relais couvrant une cellule, un canal radio, appelé "canal balise", est spécialisé comme canal de signalisation. Dans le sens relais vers mobiles, la première voie du canal balise transmet en permanence des messages, et permet à un mobile en état de veille d'accéder au système fixe de communication, relais et réseau commuté téléphonique, et de lui transmettre des messages. Pour sélectionner un relais, un mobile effectue une mesure de champ radioélectrique dans la première voie du canal balise, et tient compte des informations de veille contenues dans les messages qui sont émis en permanence dans la première voie balise.

La localisation d'un mobile dans le réseau cellulaire est effectuée à l'aide d'une procédure connue sous le nom de "mécanisme d'inscription". Lorsque le mobile change de cellule ou de zone de localisation, ou lorsque le mobile est mis sous tension, le mobile se signale au système fixe en envoyant un message sur la seconde voie du canal balise, correspondant le plus souvent au relais duquel le mobile reçoit le champ radioélectrique le plus élevé. Le système fixe comprend une base de données permettant de mémoriser la localisation des mobiles.

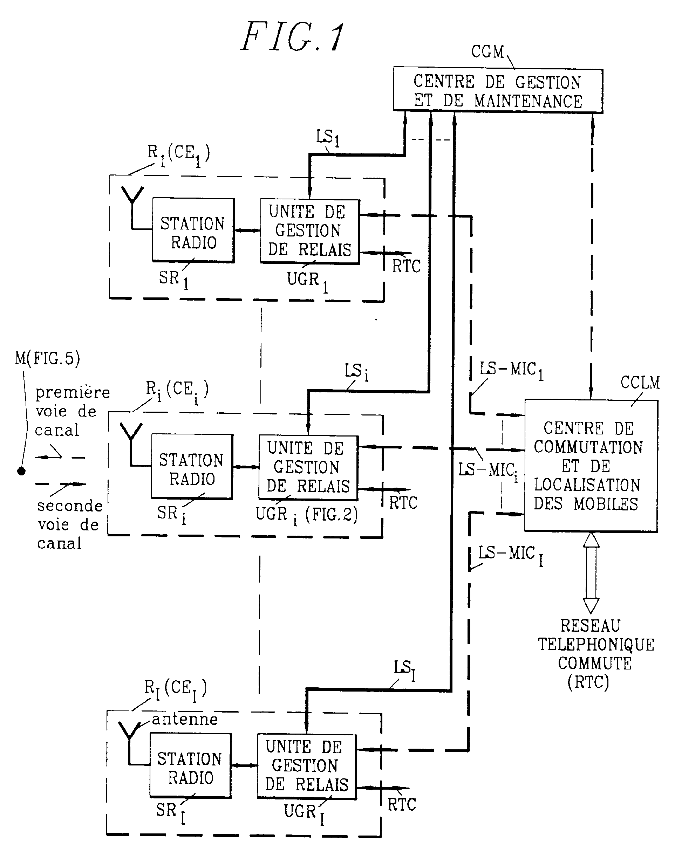

L'architecture du réseau cellulaire est illustrée à la Fig. 1. Chaque cellule $CE_i$, où i est entier compris entre 1 et I, est couverte à l'aide d'un relais $R_i$ qui comprend principalement une station émettrice-réceptrice radio $SR_i$ et une unité de gestion de relais $UGR_i$.

L'unité de gestion de relais $UGR_i$ est reliée par des interfaces de type MIC au réseau téléphonique commuté RTC. Toutefois, comme représenté en traits interrompus courts dans la Fig. 1, pour les réseaux cellulaires à haute densité de trafic, l'unité $UGR_i$ est aussi reliée par l'intermédiaire d'une liaison spécialisée $LS\text{-}MIC_i$ à un centre de commutation et de localisation des mobiles CCLM qui centralise les fonctions de localisation des mobiles, et de transfert intercellulaire en cours de communication. Le centre CCLM est relié au réseau téléphonique commuté RTC.

Le réseau cellulaire comprend également des moyens d'exploitation du réseau. L'exploitation des relais est effectuée, de préférence, localement à partir d'un télétype TTY. Les relais $R_1$ à $R_I$ sont également télé-exploités à partir d'un centre de gestion et de maintenance CGM, auquel les relais sont raccordés par des liai-

sons spécialisées quatre fils $LS_1$ à $LS_l$

La station radio $SR_i$ comprend une antenne et des moyens classiques d'émission de puissance et de réception, de modulation et de démodulation pour chacun des canaux radio assignés au relais. La puissance d'émission $P_i$ de la station $SR_i$ est constante pour tous les canaux radio et est invariable même lorsque le trafic dans la cellule associée $CE_i$ est saturé.

A ce sujet, notamment, on pourra se reporter au livre intitulé "Systèmes de radiocommunication avec les mobiles", Jean-Gabriel Rémy, Jean Cueugniet et Cédric Siben, collection Technique et Scientifique des Télécommunications, Eyrolles, 1988, et particulièrement au chapitre 15.5 "RADIOCOM 2000" de ce livre.

En référence à la Fig. 2, une unité de gestion de relais $UGR_i$ comprend deux ensembles identiques composés chacun d'un processeur maître 1A, 1B, tel qu'un processeur INTEL 80286 à 2 Moctets de mémoire, d'un brasseur de voies 2A, 23 et d'un bus de commande 10A, 10B. Ces ensembles fonctionnent en mode normal et mode secours respectivement. Des circuits esclaves, en nombre variable selon la capacité du relais, gèrent des échanges de signaux avec le réseau téléphonique RTC, et le centre de commutation et de localisation CCLM, et les émetteurs et récepteurs dans la station radio $SR_i$. Les circuits esclaves, ici au nombre de cinq, 31 à 35 sont mis en relation avec les brasseurs 2A et 2B via deux bus à huit canaux MTC 20A et 20B au débit de $8*256 = 2048$ kbit/s. Chaque circuit esclave est assigné dans le bus de commande 10A, 10B à une liaison de signalisation avec le processeur maître actif 1A, 1B du type liaison série asynchrone 9600 bit/s. Chaque circuit esclave comprend une unité de traitement telle que processeur INTEL 8088 à 32 kilooctets de mémoire, et des moyens spécifiques à chaque type de circuit. Les principaux circuits esclaves sont :

- un double modem 31 à 300 bit/s assurant des échanges d'information avec d'autres relais $R_1$ à $R_{i-1}$ et $R_{i+1}$ à $R_l$ via le réseau RTC, ou le centre de commutation et de localisation CCLM ;
- une double interface MIC 2 Mbit/s, 32, pour raccordement de l'unité de gestion $URG_i$ au réseau téléphonique RTC, directement ou via la liaison spécialisée $LS\text{-}MIC_i$ ;
- un dispositif de gestion d'alarmes matérielles 33 ;
- un double signaleur multifréquence 34 pour gérer et coder/décoder la numérotation d'abonné ;
- une double interface de gestion de canaux radio 35 qui commute les signaux de phonie et/ou les signaux de signalisation vers les canaux radio et qui comprend en particulier un modem FFSK à 1200 bit/s transmettant ou recevant des messages de signalisation dans les canaux radio associés à la station $SR_i$.

L'unité de gestion de relais $UGR_i$ comprend également un processeur d'exploitation 11 du type INTEL 8086 à un Moctet de mémoire, réalisant les fonctions d'exploitation de l'unité. Le processeur 11 gère une interface vers un télétype TTY pour l'exploitation locale, du type liaison asynchrone série V24 à 1200 bit/s, et une seconde interface vers le centre de gestion et de maintenance CGM via la ligne spécialisée à quatre fils $LS_i$ utilisée à 4800 bit/s, en mode synchrone.

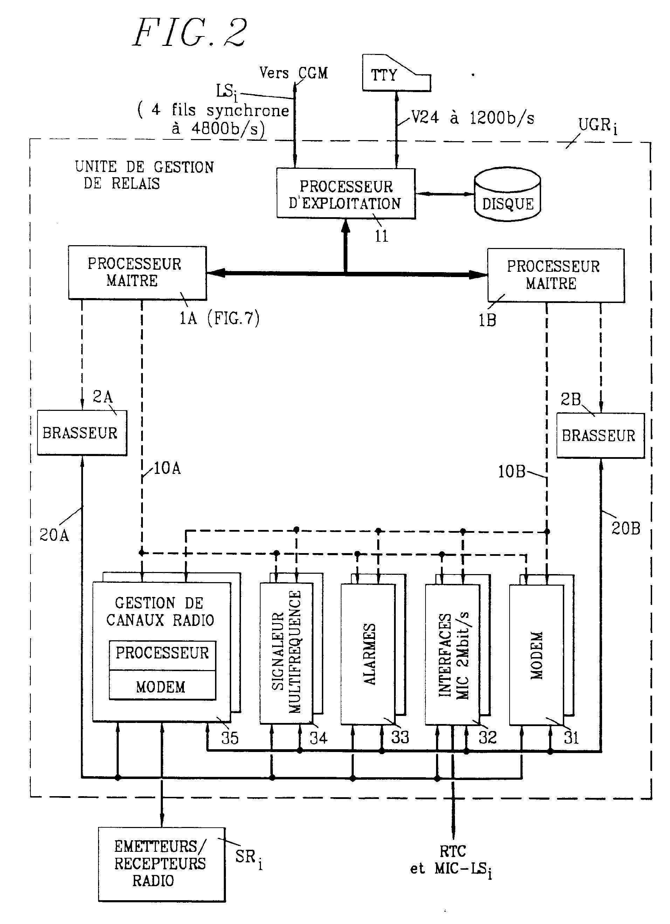

Le centre de gestion et de maintenance CGM est décrit maintenant en référence à la Fig. 3. Il comprend des machines frontales de communication MF gérant chacune des interfaces de liaison à quatre fils et 4800 bit/s $LS_1$ à $LS_l$ avec un groupe de relais , par exemple au nombre de 10. Les machines MF sont reliées à un bus ETHERNET. Une machine de traitement de facteurs et d'indicateurs ST incluse dans le centre CGM est typiquement une station de travail ST utilisant le système d'exploitation UNIX et suffisamment puissante. La station ST est liée classiquement à un moniteur MO à écran et clavier notamment pour sélectionner des facteurs propres aux calculs d'indicateurs et de paramètres et pour afficher des données et statistiques de trafic.

Le principe de sélection d'un relais par un mobile ainsi que les divers moyens conçus pour cette sélection selon l'invention sont maintenant décrits.

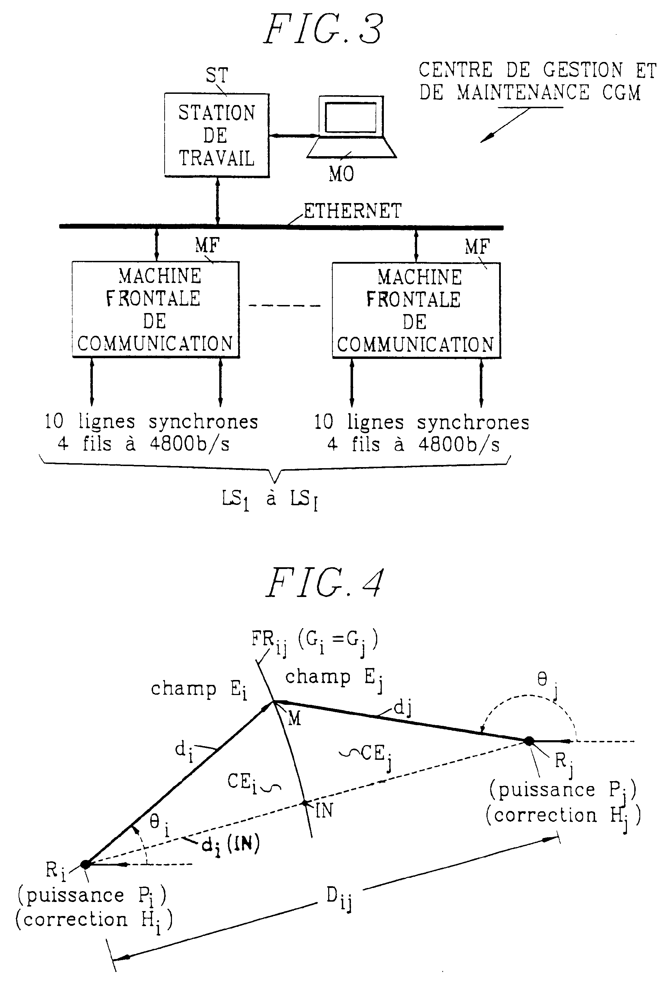

Selon le graphe de la Fig. 4, on rappelle que chaque relais $R_i$ émet en permanence un signal prédéterminé appelé "voie balise". les mobiles mesurent les champs radioélectriques, notés $E_1$ à $E_l$, des voies balises qu'ils reçoivent. Une modélisation du processus de propagation consiste à exprimer le champ $E_i$ provenant du relais $R_i$ et reçu par un mobile donné M, comme une fonction de la puissance constante d'émission du relais $R_i$, notée $P_i$, de la distance entre le mobile M et le relais $R_i$, notée $d_i$, et de l'angle de positionnement entre la droite joignant le mobile M et le relais $R_i$ et l'axe de propagation de l'antenne du relais $R_i$, noté $\theta_i$ :

$$(1) \qquad E_i = E(P_i, d_i, \theta_i)$$

En milieu urbain, on peut choisir par exemple :

$$(2) \qquad E_i = -40 \log (d_i / f_i) + P_i \qquad \text{en dBm,}$$

où $f_i$ est une fonction de l'angle $\theta_i$.

Par ailleurs, chaque relais diffuse en permanence, via la première voie balise respective, des informations numériques utilisées par le mobile M dans le processus de sélection de relais, en particulier, un paramètre ou plusieurs paramètres de correction du champ radioélectrique. Ces paramètres sont également utilisés à des fins d'ingénierie radio. Selon l'invention, l'un de ces paramètres est un paramètre de correction de champ, noté $H_i$. Pour chaque voie balise reçue, le mobile calcule un champ corrigé, noté $G_i$, qui est une fonction de $E_i$ et $H_i$ :

$$(3) \qquad G_i = G (E_i, H_i)$$

$G_i$ est une fonction croissante de $E_i$ et typiquement s'exprime selon la relation :

$$(4) \qquad G_i = E_i - H_i \qquad \text{en dBm.}$$

Le mobile M compare ensuite la valeur des champs corrigés $G_1$ à $G_l$, et retient le relais correspondant au champ corrigé le plus élevé, soit par exemple le champ $G_i$ relatif au relais $R_i$.

Ainsi, pour un mobile donné M, la frontière $FR_{ij}$ entre deux cellules voisines $CE_i$ et $CE_j$, où les indices i et j sont compris entre 1 et I, est définie par l'équation :

$$(5) \qquad G_i = G_j,$$

soit

$$(6) \qquad G( E(P_i, d_i, \theta_i),H_i) = G(E(P_j,d_j, \theta_j), H_j)$$

Pour $P_i$, $P_j$, $H_i$ et $H_j$ fixés, cette dernière équation détermine le tracé de la frontière $FR_{ij}$ entre les cellules $CE_i$ et $CE_j$.

Dans le cas particulier correspondant aux équations (2) et (4), on déduit la relation suivante pour l'intersection IN de la frontière avec la droite reliant les relais $R_i$ et $R_j$ :

$$(7) \quad d_i(IN) = d_{io} \frac{D_{ij}/d_{io}}{1+(D_{ij}/d_{io}-1)\cdot 10^{[H_i-H_j]/40}}$$

$D_{ij}$ est la distance entre les deux relais $R_i$ et $R_j$ et $d_{io}$ est la valeur de $d_i$ pour $H_i-H_j = 0$.

L'emplacement de la frontière $FR_{ij}$ dépend donc de la valeur de la différence entre les paramètres de correction $H_i$ et $H_j$. Ainsi, la surface d'une cellule $CE_i$ dépend de la valeur de son paramètre de correction $H_i$ , et de la valeur des paramètres de correction $H_j$ de cellules voisines de la cellule $CE_i$.

En supposant les mobiles uniformément répartis dans le réseau cellulaire, le nombre de mobiles ayant sélectionné un relais, et donc le trafic radio du relais , est proportionnel à la surface de la cellule. Ainsi, selon l'invention, une variation du paramètre $H_i$ de la cellule $CE_i$ ou des paramètres $H_j$ des cellules voisines se traduit par une variation de la surface de la cellule $CE_i$ et donc du trafic radio du relais $R_i$. Il est à noter que la variation du paramètre $H_i$ n'influence point les puissances d'émission du relais $R_i$ et des mobiles qui sont complètement indépendantes des résultats de la selection de relais et qui sont constantes.

Par exemple, en supposant la cellule $CE_i$ circulaire centrée sur le relais $R_i$, on montre à l'aide de l'équation (7), qu'une augmentation de paramètre de correction $H_i$ de 1 dB implique une diminution du champ corrigé $G_i$ et un rapprochement des frontières entre la cellule $CE_i$ et les cellules voisines $CE_j$ vers le relais $R_i$ et, par suite, crée une diminution de trafic de 6 %. Le trafic est ainsi transféré vers l'ensemble des cellules voisines de la cellule $CE_i$. Réciproquement, pour un nombre prédéterminé de canaux du relais $R_i$, toute augmentation de trafic entraînant une saturation est évitée, selon l'invention, en réduisant la surface de la cellule $CE_i$ et donc en augmentant le paramètre de correction $H_i$.

Le procédé selon l'invention consiste donc principalement à réguler la charge radioélectrique de chacun des relais en modifiant le paramètre de correction de champ du relais par des moyens, dits automate, conçus pour optimiser la répartition de charge entre les différents relais.

Les relais $R_1$ à $R_l$ diffusent en permanence des messages dans les premières voies balises respectives. Chaque message contient , comme déjà dit, un champ de 16 bits contenant des informations de veille caractéristiques du relais. Quinze bits par exemple sont utilisés pour coder le paramètre de correction. Ainsi, le paramètre de correction peut prendre 16 valeurs de 0 à 15 dB par pas de 1 dB.

Lorsque le mobile M est en veille, c'est-à-dire lorsqu'aucune communication n'est établie, le mobile, cycliquement, d'une part est à l'écoute de la voie balise pour le cas échéant recevoir un message du relais dans la cellule duquel le mobile se trouve, d'autre part scrute les autres voies balises que le mobile reçoit.

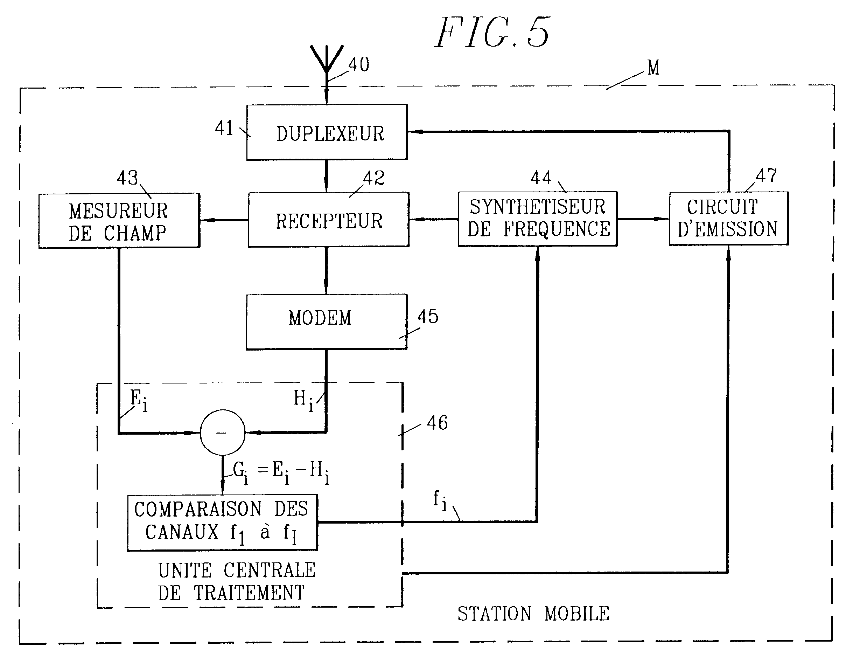

Les moyens matériels dans le mobile d'intérêt pour l'invention sont représentés à la Fig. 5. Le mobile M comprend un récepteur 42 recevant des signaux radioélectriques par une antenne 40 et un duplexeur 41, un mesureur de champ 45 typiquement de sensibilité 5 à 50 dB/$\mu$V fem, un synthétiseur de fréquence 44 déterminant les fréquences de réception et d'émission, un modem FFSK 45 démodulant la signalisation FFSK à 1200 bit/s, et une unité centrale de traitement 46 tel qu'un microprocesseur 46 de type Zilog Z80. Le mobile M comprend également un circuit d'émission 47 relié au synthétiseur 44 et au duplexeur 41 et commandé par l'unité 46.

L'unité 46 possède une table des fréquences $f_1$ à $f_l$ des canaux radio pouvant être utilisés comme voies balises et assignés aux relais $R_1$ à $R_l$. Le synthétiseur 44 est positionné successivement et cycliquement à chacune de ces fréquences. Pour chaque fréquence $f_i$, le signal de sortie du modem 45 est analysé par l' unité 46 pour déterminer d'une part s'il s'agit d'une voie balise en réponse à des informations de veille , et le cas échéant pour lire les informations caractéristiques du relais $R_i$, parmi lesquelles la valeur du paramètre de correction de champ $H_i$. En parallèle, le mesureur de champ 43 mesure la puissance du champ reçu $E_i$ pour la voie balise du relais $R_i$ et transmet la valeur du champ mesuré à l'unité 46. L'unité 46 calcule la différence $E_i$ - $H_i$ et mémorise le champ corrigé $G_i$.

Lorsque le mobile M a scruté l'ensemble des voies balises répertoriées dans la table de fréquences, y compris la voie balise du relais sous lequel il se trouve, l'unité 46 compare les valeurs de champ corrigé et détermine la voie balise présentant la valeur de champ corrigé la plus élevée telle qu'une quantité $E_i$ - $H_i$ obtenue en retranchant la valeur du paramètre de correction à la valeur du champ selon l'équation (4) attribuée à la réalisation préférée décrite ici. Si cette voie balise est différente de la voie balise du relais sous lequel le mobile se trouve, le mobile change de relais, et sélectionne le champ corrigé ayant la valeur la plus élevée.

Le mobile par exemple scrute une voie balise toutes les 700 ms. Toutes les 700 ms, le mobile reste à l'écoute de la première voie balise du relais sous lequel il se trouve pendant 180 ms environ (1 trame), et le reste du temps, se positionne sur la fréquence d'une autre première voie balise pour la scruter. Pour I = 40 voies balises, la période de scrutation est d'environ 28 secondes.

Différents indicateurs de charge de trafic sont en général calculés par le système fixe de communication et sont par exemple les suivants :
- au niveau de chacun des relais, $R_1$ à $R_I$, le trafic radio ;
- au niveau d'une cellule ou au niveau de zones géographiques comportant plusieurs cellules voisines et appelées zones de localisation, le nombre de mobiles dits "inscrits" dans la cellule ou dans la zone de localisation. Le système fixe connaît soit le numéro de la cellule, soit le numéro de la zone de localisation dans laquelle se trouve chaque mobile, ce qui permet d'acheminer les appels provenant du réseau téléphonique.

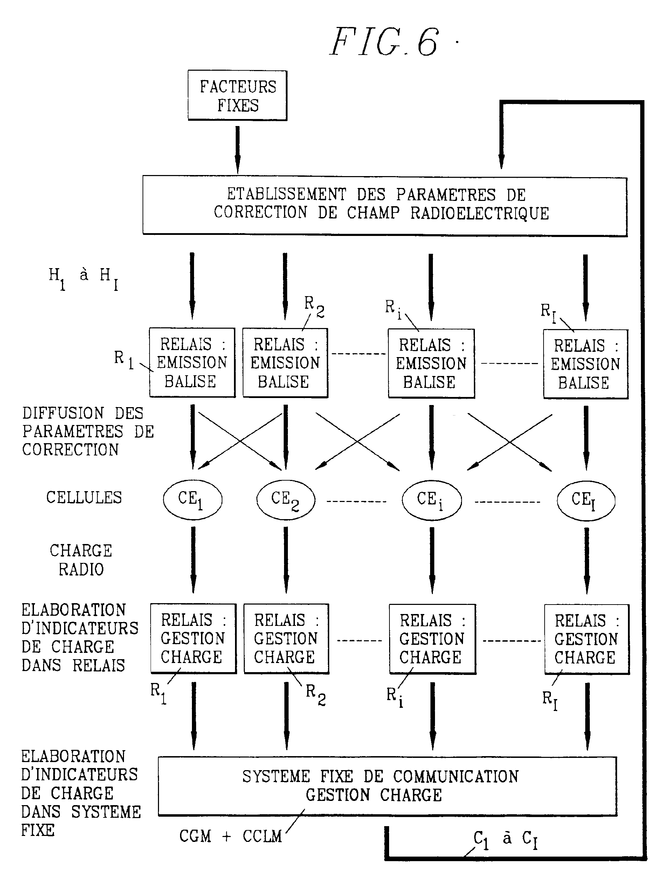

Les indicateurs de charge sont utilisés pour commander le ou les paramètres de correction de champ de chacun des relais. Selon la Fig. 6, l'automate comprend schématiquement des moyens d'établissement de paramètres qui calculent la valeur du ou des paramètres de correction de champ de chacun des relais en fonction de la valeur des indicateurs de charge, et en fonction de facteurs fixés par l'exploitant. Chaque relais $R_i$ émet le paramètre de correction respectif $H_i$ qui agit sur la surface et la charge de la cellule correspondante $CE_i$ et sur celles des cellules voisines. Les indicateurs de charge sont élaborés au niveau de chaque relais, et au niveau de l'infrastructure du système fixe. Ces indicateurs de charge peuvent eux-mêmes être élaborés à partir d'indicateurs élémentaires.

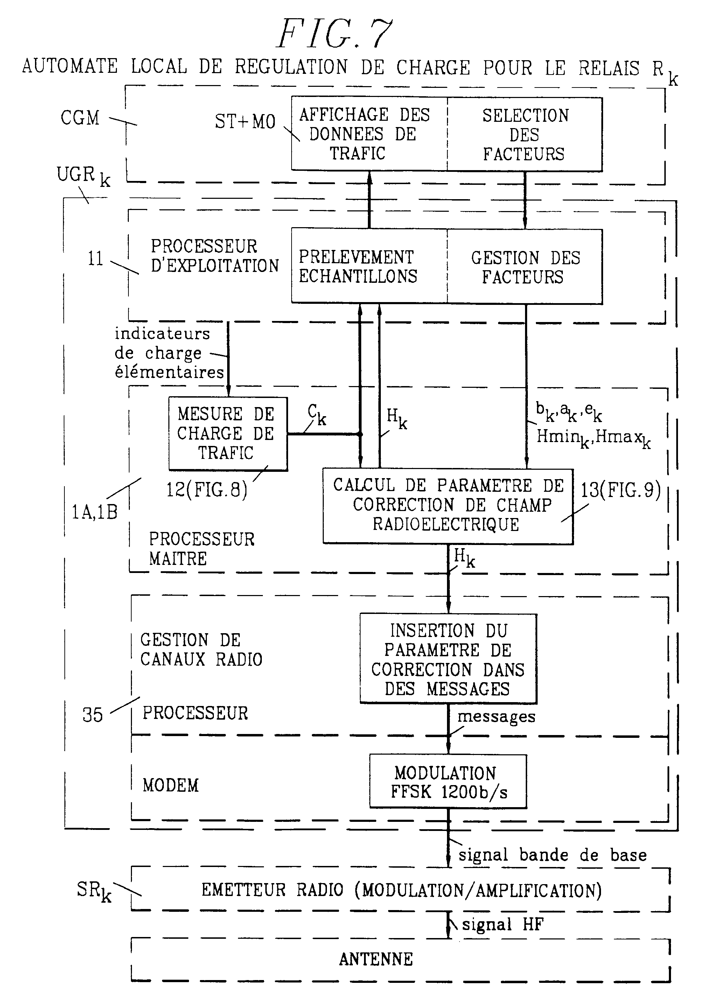

Selon un premier mode de réalisation de l'invention, un paramètre de correction $H_k$ est établi au niveau du relais $R_k$ correspondant, où k est un entier compris entre 1 et I. Dans ce cas, un automate local de régulation de charge montré à la Fig. 7 utilise principalement les moyens matériels de l'unité de gestion de relais $UGR_k$ du relais $R_k$ montrés à la Fig. 2.

Pour le relais $R_k$ , l'automate est essentiellement composé d'un module de mesure de charge de trafic 12, fournissant un indicateur de charge $C_k$, et d'un module 13 calculant le paramètre de correction de champ radioélectrique $H_k$. Ces deux modules sont réalisés à l'aide du processeur maître 1A ou 1B de l'unité $UGR_k$.

Les valeurs des facteurs de l'automate sont fixées par le centre de gestion et de maintenance CGM. Ils sont gérés, en ce qui concerne notamment leur mémorisation sur disque et vérification de la cohérence des valeurs, par le processeur d'exploitation 11 de l 'unité $UGR_k$. Ces facteurs comprennent en particulier la valeur minimum $Hmin_k$ et maximum $Hmax_k$ du paramètre de correction $H_k$. Ces deux valeurs d'une part fixent la plage de variation du paramètre de correction $H_k$, et d'autre part contribuent à ajuster manuellement la zone de couverture "minimum" et "maximum" du relais $R_k$. Ces facteurs fixes comprennent également un seuil de charge nominale de trafic $b_k$, un seuil d'hystérésis $e_k$, et un facteur de perte $a_k$ inférieur à 1. Les facteurs $b_k$ et $c_k$ s'expriment en Erlang, le facteur $a_k$ en Erlang/dB, et les champs en dBm.

Les valeurs de l'indicateur de charge $C_k$ et du paramètre de correction $H_k$ sont échantillonnées périodiquement par le processeur d'exploitation 11. Les échantillons obtenus sont transmis périodiquement , par exemple toutes les 30 s, au centre de gestion et de maintenance CGM pour affichage, et sont utilisées pour analyser l'état de trafic des différents relais du réseau.

Le paramètre de correction $H_k$ est inséré dans les messages émis dans la première voie balise par le processeur de l'interface esclave 35 gérant les canaux radio associés au relais $R_k$.

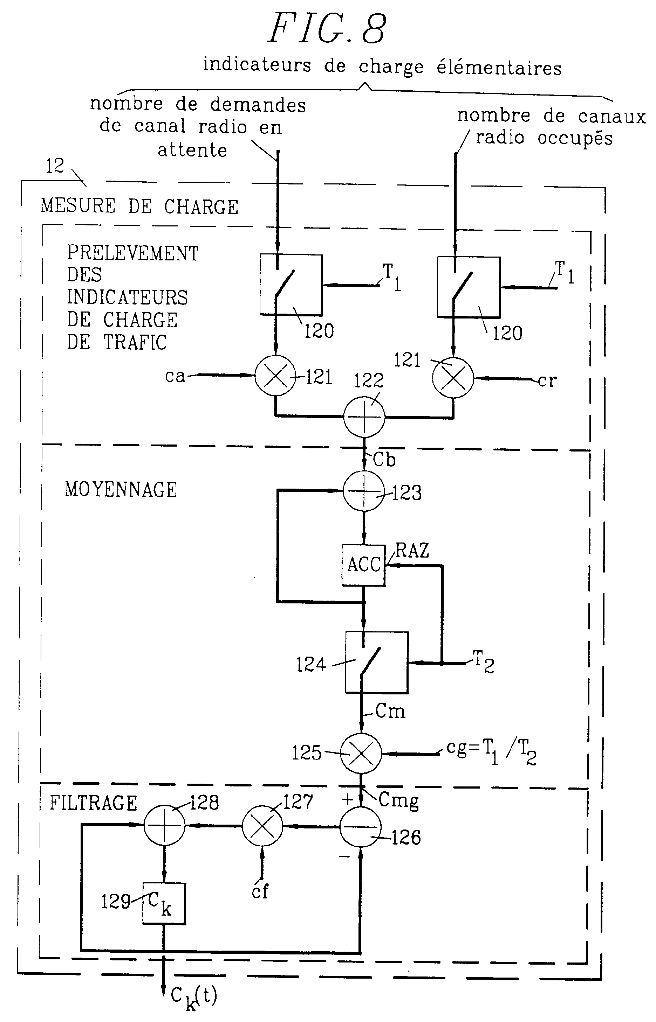

Un mode de réalisation du module de mesure de charge 12 est montré à la Fig. 8. Des indicateurs de charge de trafic élémentaires déterminés par le processeur d'exploitation 11 sont par exemple au nombre de deux : le nombre de canaux radio du relais $R_k$ occupés, et le nombre de demandes de canaux radio en attente. D'autres indicateurs de charge élémentaires pourraient être utilisés de la même façon, comme par exemple le nombre de mobiles "inscrits" dans la cellule $CE_k$ .

Les indicateurs de charge élémentaires sont échantillonnés en 120. Un premier indicateur de charge intermédiaire Cb est obtenu par la combinaison linéaire 122 des deux indicateurs élémentaires qui sont pondérés en 121 par des coefficients ca et cr, par exemple ca = cr = 1. L'indicateur de charge $C_b$ est traité à l'aide de moyens de moyennage et de moyens de filtrage. Les moyens de moyennage comprennent un additionneur 123 et un accumulateur ACC, dans lequel est mémorisée l'accumulation des valeurs de Cb calculées toutes les $T_1$=5 secondes. Toutes les $T_2$ = 60 secondes, la valeur Cm de l'indicateur ainsi accumulée dans l'accumulateur ACC est lue en 124, et l'accumulateur est remis à zéro (RAZ) :

$$Cm(t) = Cb(t - 55\,s) + Cb(t - 50\,s) + .... + Cb(t - 5\,s) + Cb(t)$$

où t désigne la variable temps.

La valeur Cm est multipliée en 125 par un facteur cg, représentatif de l'inverse du nombre d'échantillons accumulés dans l'accumulateur pendant $T_2$, soit cg = $T_1 / T_2$. Le produit obtenu Cmg est égal à la moyenne des valeurs d'indicateur de charge intermédiaire pendant $T_2$

$$Cmg = Cm * cg$$

Le filtrage est par exemple du type récursif d'ordre 1 et comporte un soustracteur 126 entre l'indicateur moyenné Cmg et l'indicateur "filtré" $C_k$ sortant du module 12, un multiplieur 127 de la différence d'indicateurs obtenue par un coefficient cf en un indicateur produit, et un additionneur 128 de l'indicateur sortant et l'indicateur produit pour fournir l'indicateur $C_k$ à une cellule de mémoire tampon 129. Le filtrage s'exprime par :

$$C_k(t) = C_k(t - T_2) + cf * (Cmg(t) - C_k(t - T_2))$$

La valeur d'indicateur de charge $C_k$ est donc calculée et mémorisée toutes les $T_2$ secondes. Le coefficient cf est par exemple égal à 0,2.

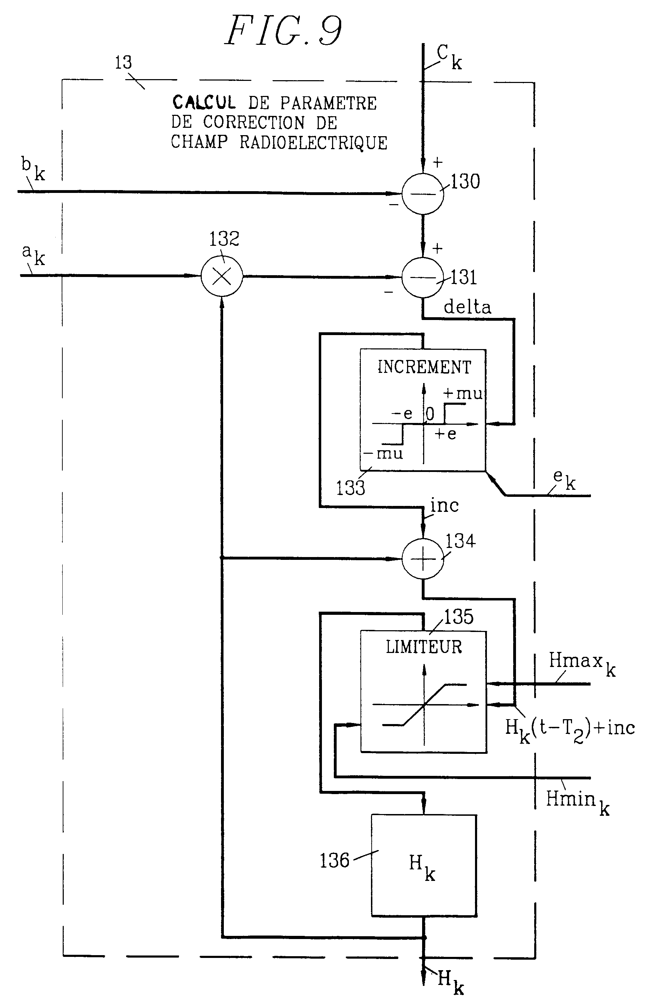

Le module de calcul du paramètre de correction de champ radioélectrique 13 est montré à la Fig. 9. Ce calcul est réalisé de préférence au rythme du calcul de l'indicateur de charge $C_k$, c'est-à-dire toutes les $T_2$ = 60 secondes.

Le module 13 calcule un différentiel de charge "delta" fonction du seuil de charge nominale $b_k$ et du facteur de perte $a_k$ au moyen de deux soustracteurs 130 et 131 et d'un multiplieur 132 suivant la relation :

$$(8) \qquad delta = C_k - b_k - a_k * H_k(t - T_2)$$

Puis un moyen de comparaison 133 du module 13 détermine la valeur d'un incrément inc du paramètre de correction $H_k$ en fonction de la valeur de delta par rapport au seuil d'hystérésis $e_k$ :

$$(9) \qquad si\ e_k < delta, \qquad alors\ inc = +\,mu\ ;$$
$$si -e_k < delta < +e_k, \qquad alors\ inc = 0\ ;$$
$$si\ delta < -e_k, \qquad alors\ inc = -\,mu.$$

Dans le cas du réseau cellulaire décrit en référence à la Fig. 1, puisque le pas du paramètre de correction codé dans les messages est de 1 dB, mu est choisi égal à 1 dB.

La somme de l'ancienne valeur du paramètre de correction $H_k(t-T_2)$ et de l'incrément inc à l'instant t est obtenue dans un additionneur 135 et est limitée par des valeurs prédéterminées $Hmax_k$ et $Hmin_k$ dans un circuit de comparaison 135 :

$$(10) \qquad si\ Hmax_k < H_k(t - T_2) + inc,\ alors \qquad H_k(t) = Hmax_k$$
$$si\ Hmin_k < H_k(t - T_2) + inc < Hmax_k,\ alors \qquad H_k(t) = H_k(t - T_2) + inc\ ;$$
$$si\ H_k(t - T_2) + inc < Hmin_k,\ alors \qquad H_k(t) = Hmin_k.$$

La nouvelle valeur du paramètre de correction $H_k(t)$ est mémorisée en cellule de mémoire tampon 136.

Le principe de régulation de la charge du relais $R_k$ est le suivant. Comme déjà dit, la charge radioélectrique du relais est une fonction décroissante de la valeur du paramètre de correction $H_k$. Ainsi, l'automate local selon l'invention tend à annuler la valeur de la variable delta selon la relation (8). En effet, si la charge croît, l'indicateur de charge $C_k$ croît, et delta devient positif, puis supérieur à $e_k$. D'après les inégalités (9) et (10), le paramètre de correction $H_k$ est incrémenté de la valeur mu (1 dB), ce qui abaisse la charge du relais, et donc régule la charge du relais.

Ainsi, pour $a_k = 0$, l'automate local tend à maintenir la valeur de l'indicateur de charge $C_k$ égal au seuil de charge nominale $b_k$. La valeur de $b_k$ correspond à un trafic maximal du relais $R_k$, c'est-à-dire à une saturation du trafic permettant une qualité de service acceptable ; par exemple, pour un relais de 40 canaux, $b_k = 30$ Erlang.

Le seuil d'hystérésis $e_k$ évite les oscillations dues en particulier au pas fini du paramètre de correction ; par exemple $e_k = 0,03 * b_k$.

La régulation ne fonctionne qu'entre les limites $Hmin_k$ et $Hmax_k$ de la plage de variation du paramètre de correction. Dans le cas où le paramètre $H_k$ atteint la limite inférieure $Hmin_k$, l'indicateur de charge $C_k$ pourrait devenir inférieur au seuil de charge nonimale $b_k$. Dans le cas où le paramètre de correction $H_k$ atteint la limite supérieure $Hmax_k$, l'indicateur de charge $C_k$ pourrait devenir supérieur au seuil de charge nominale $b_k$, ce qui induit une mauvaise qualité de service.

Le facteur de perte $a_k$, lorsqu'il est appliqué à l'ensemble des relais $R_1$ à $R_l$ du réseau, réduit les variations des paramètres de correction $H_1$ à $H_l$, et donc le risque d'atteindre les limites supérieures respectives $Hmax_1$ à $Hmax_l$. Les performances de régulation sont alors globalement meilleures pour l'ensemble du réseau. On

choisit par exemple $a_k = 0,01 * b_k$.

L'algorithme de calcul de paramètre de correction mise en oeuvre dans le module 13 est du type "gradient". Il consiste en effet à modifier la valeur du paramètre de correction $H_k$ d'une quantité opposée au gradient (dérivée) d'un critère "J" d'optimisation de la charge qui est :

$$(11) \qquad J = JC + JH$$
$$\text{avec } JC = (C_k - b_k)^2 \text{ et } JH = \alpha_k * H_k^2$$

Le critère JC permet de minimiser l'écart entre la charge réelle du relais et sa charge nominale. Le critère JH peut être interprété par exemple comme un coût pour une dégradation de service apporté par le déplacement de la frontière de la cellule $CE_k$ lorsque $H_k$ augmente.

L'opposé de la dérivée de J par rapport à $H_k$ est :

$$(12) \quad \frac{dJ}{dH_k} = 2*\left(-\frac{dC_k}{dH_k}\right)*(C_k - b_k - a_k * H_k) \text{ avec } a_k = -\alpha_k / \frac{dC_k}{dH_k}.$$

$(dC_k/dH_k)$ étant négatif, la dérivée (12) est bien de même signe que "delta" dans la relation (8).

Par ailleurs, il est à noter que l'exploitant du réseau cellulaire ne peut affecter un ou plusieurs automates globaux qu'à un ou plusieurs relais déterminés dont le trafic varie fortement et fréquemment, tandis que les autres relais sont classiques, avec des paramètres de correction de champ respectifs convenablement choisis par rapport à des trafics moyens ou maximums.

Selon un second mode de réalisation plus performant, un automate de régulation de charge global considère pour le calcul du paramètre de correction $H_k$ pour le relais $R_k$ non seulement l'indicateur de charge $C_k$ du relais considéré, mais aussi la charge des relais voisins et de l'ensemble du réseau cellulaire de radiocommunication. Par ailleurs, la modification des valeurs des paramètres de correction de deux relais $R_k$ et $R_j$ implique un déplacement de la frontière $FR_{kj}$ fonction de la différence $H_k - H_j$ comme déjà précisée en référence à la Fig. 4, ce qui peut se traduire par une dégradation de la qualité de service due à des conditions radio moins bonnes pour les mobiles proches de la frontière. L'automate de régulation selon cette seconde réalisation est avantageusement conditionné par un critère de déplacement de frontières.

Un critère théorique d'optimisation globale JG de la charge au niveau d'un réseau à cellules peut être :

$$(13) \quad JG = JGC + JGH$$

$$\text{où } JGC = \sum_{k=0}^{k=l} S_k^2 \quad , \quad \text{avec } S_k = 0 \qquad \qquad \text{si } C_k < b_k$$

$$\text{et} \quad S_k = (C_k - b_k)/b_k \quad \text{si } C_k > b_k$$

$$JGH = \alpha_k * H_k^2 + \sum_{k=0}^{k=l} \sum_{j \in V_k} \mu_{k,j} * (H_k - H_j)^2$$

$V_k$ étant l'ensemble des indices relatifs aux cellules voisines de la cellule $CE_k$.

$S_k$ représente la surcharge de la cellule $CE_k$. JGC représente la surcharge globale du réseau selon un critère quadratique.

L'opposé de la dérivée de JG par rapport à $H_k$ est :

$$(14) \quad \frac{dJC}{dH_k} = \frac{2}{b_k} * \left(-\frac{dC_k}{dH_k}\right) * (S_k - WS_k - (a_k/b_k) * H_k - WD_k)$$

avec

$$(15) \quad WS_k = \sum_{j \in V_k} \sigma_{k,j} * S_j ; \sigma_{k,j} = -\frac{b_k}{b_j} * \frac{dC_j}{dH_k} / \left(\frac{dC_k}{dH_k}\right) ; a_k = -\alpha_k * b_k^2 / \left(\frac{dC_k}{dH_k}\right);$$

$$(16) \quad WD_k = \sum_{j \in V_k} u_{k,j} * (H_k - H_j) ; u_{k,j} = -(\mu_{k,j} + \mu_{j,k}) * b_k / \left(\frac{dC_k}{dH_k}\right)$$

Comparativement à la dérivée (12), la dérivée (14) contient un terme $WS_k$ apparaissant comme une combinaison linéaire de la surcharge des relais voisins du relais $R_k$ et un terme $WD_k$ qui est corrélé au déplacement des frontières entre le relais $R_k$ et ses relais voisins.

En appliquant un algorithme du type "gradient" on obtient à l'aide de la dérivée (14) un terme "delta" global selon une relation similaire à la relation (8) :

$$(17) \qquad \text{delta } g = C_k - W_k - a_k * H_k,$$
$$\text{avec } W_k = b_k + b_k * (WS_k + WD_k),$$

où $WS_k$ est un indicateur de surcharge qui est représentatif de la surcharge des cellules voisines, et $WD_k$ est un indicateur représentatif du déplacement des frontières avec les cellules voisines. Selon cette seconde réalisation, le module de calcul de proximité de correction 13 (Fig 9) dans le relais $R_k$ est encore utilisable en remplaçant $b_k$ par $W_k$. Le facteur $W_k$ est appelé dans la suite "indicateur global de charge de voisinage".

L'automate global selon cette seconde réalisation comprend ainsi des unités de gestion $UGR_1$ à $UGR_r$ dans les relais $R_1$ à $R_l$ comme illustré à la Fig. 7 et en particulier comprenant chacune des modules 12 et 13 comme montrés aux Figs. 8 et 9, mais également des moyens matériels centralisés au centre de gestion et de maintenance CGM pour calculer les indicateurs globaux de charge de voisinage $W_1$ à $W_l$, et plus particulièrement les indicateurs élémentaires $WS_1$ à $WS_l$ et $W_{D1}$ à $WD_l$. Ces moyens de calcul centralisés sont maintenant décrits en détail.

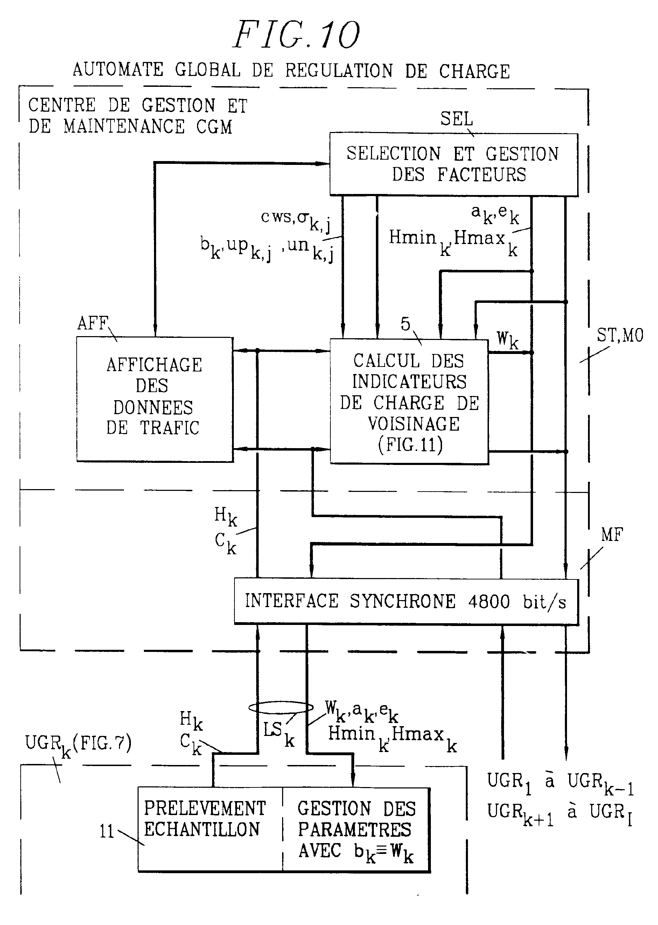

Comme montré à la Fig 10, l'automate global de régulation de charge comprend outre les automates locaux des relais $R_1$ à $R_l$ selon la Fig. 7, un module de calcul numérique centralisé 5 inclus dans le centre de gestion et de maintenance CGM et, en pratique, répartis pour l'essentiel dans la station de travail ST et en partie dans les machines frontales MF selon la Fig. 3.

Le module de calcul centralisé 5 enregistre les valeurs des indicateurs de charge $C_1$ à $C_l$, et des paramètres de correction $H_1$ à $H_l$, qui sont transmises périodiquement, toutes les 30 s par exemple, des relais vers le centre de gestion et de maintenance. Les indicateurs de charge de voisinage $W_1$ à $W_l$ sont calculés et mémorisés, et transmis périodiquement vers les relais, toutes les 30 s selon l'exemple précédent. Ces indicateurs de charge de voisinage remplacent les seuils de charge nominale $b_1$ à $b_l$ dans les automates locaux, respectivement.

Ainsi, d'après les relations (8) et (17), chacun des automates locaux tend à maintenir la valeur de l'indicateur de charge respectif $C_k$ égale à

$$(18) \qquad C_k = W_k + a_k * H_k$$

Les différents facteurs pour le calcul des indicateurs de charge de voisinage et pour les automates locaux au relais sont gérés au niveau du centre CGM. Par ailleurs, les valeurs des indicateurs de charge et des paramètres de correction sont affichés par le moniteur MO de la station ST dans le centre CGM afin de pouvoir analyser l'état de trafic du réseau cellulaire.

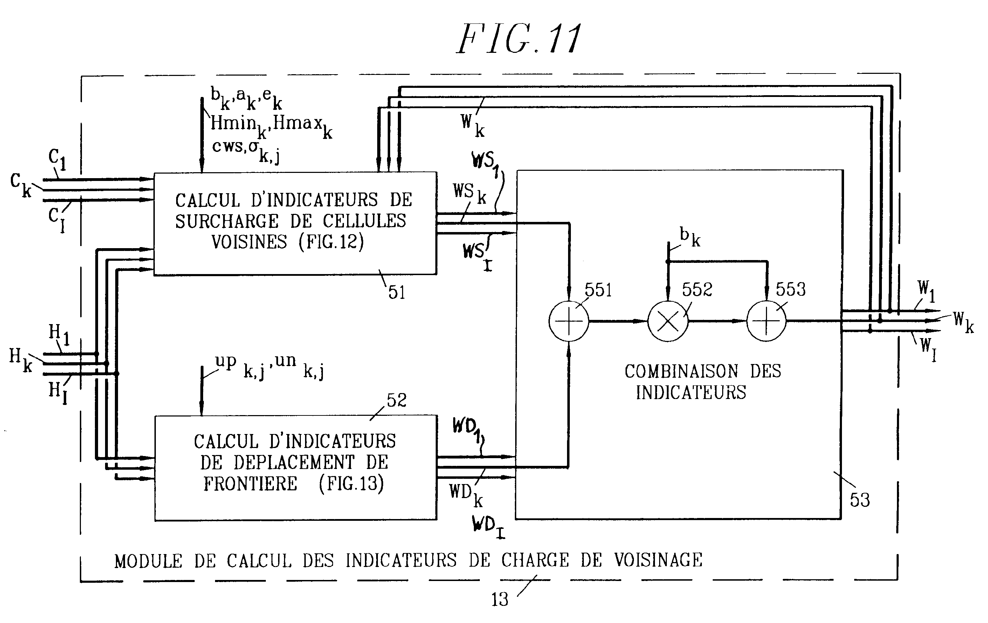

Selon la Fig. 11, le module de calcul des indicateurs de charge de voisinage 5 inclus dans la station de travail ST comprend pour chacun des relais $R_1$ à $R_l$ trois modules : un module de calcul d'indicateurs de surcharge de cellules voisines 51, un module de calcul d'indicateurs de déplacement de frontière 52, et un module de combinaison des indicateurs de surcharge et de déplacement 53.

Le module de combinaison des indicateurs 53 effectue, pour la cellule $CE_k$, la somme de l'indicateur de surcharge des cellules voisines $WS_k$ et de l'indicateur de déplacement $WD_k$ transmis par les modules 51 et 52 vers un additionneur 551, puis la multiplication de cette somme par le seuil de charge nominale $b_k$ en un produit et l'addition de ce produit et du même seuil $b_k$ à travers un multiplieur 552 et un additionneur 553, pour obtenir l'indicateur de charge de voisinage $W_k$.

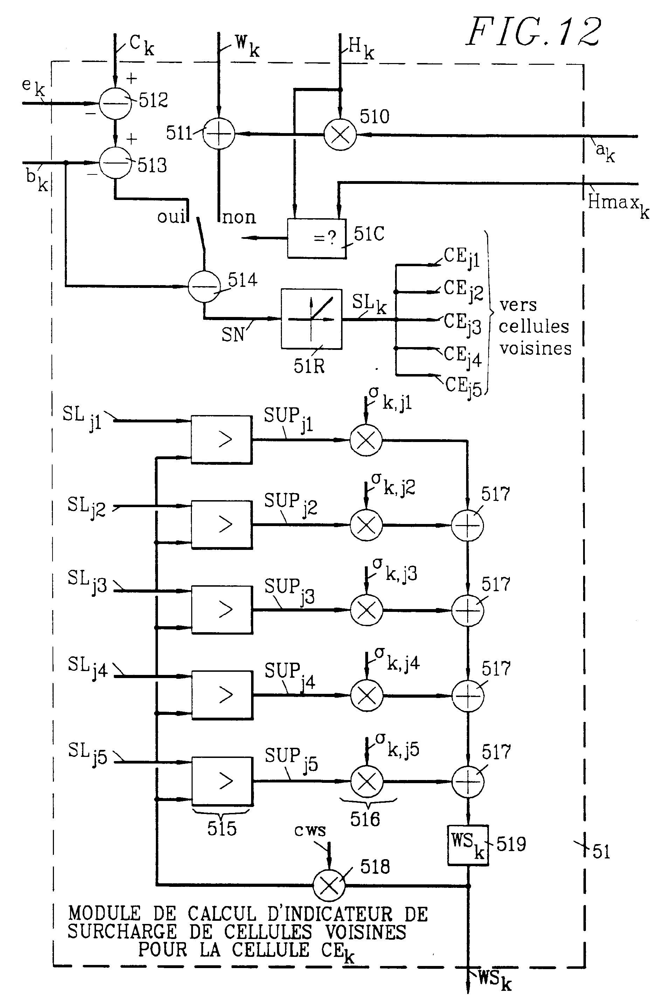

En référence à la Fig. 12, le module 51 calcule l'indicateur de surcharge $WS_k$ attribué à la cellule $CE_k$ et relatif aux cellules voisines en appliquant la formule (15), avec différents aménagements destinés à privilégier la régulation de la charge des relais les plus saturés du réseau.

Dans une première partie, le module 51 calcule un indicateur de surcharge local $SL_k$. La surcharge du relais $R_k$ est la quantité $C_k - b_k$ utilisée dans les équations (13). Cependant, dans le cas où le paramètre de correction $H_k$ n'a pas atteint la limite supérieure $Hmax_k$ dans un comparateur 51C, cette quantité est évaluée au moyen d'un multiplieur 510 et d'un additionneur 511 qui reçoivent les valeurs de $W_k$ ainsi que de $a_k$ et de $H_k$, mémorisées au cycle de calcul précédent. En effet, l'automate local au relais $R_k$ maintient $C_k$ environ égal à $W_k + a_k * H_k$ selon l'équation (18). Cette méthode permet une meilleure stabilité de l'algorithme, car l'indicateur de surcharge local $SL_k$ n'est ainsi pas soumis aux fluctuations de $C_k$. Dans le cas où le comparateur 51C décèle que le paramètre de correction $H_k$ a atteint la limite supérieure $Hmax_k$, la quantité $C_k - b_k$ est diminuée du seuil d'hystérésis $e_k$ à travers deux soustracteurs 512 et 513. L'indicateur de surcharge est normalisé par division par le seuil de charge nominale $b_k$ dans un diviseur 514. Un redresseur 51R tient compte des valeurs positives de l'indicateur de surcharge normalisé SN. Selon la partie haute du diagramme de la Fig 12, on a :

$$\text{si } H_k < Hmax_k \qquad \text{, alors } SN = (W_k + a_k * H_k) / b_k$$

**10**

si $H_k = Hmax_k$ , alors SN $= (C_k - b_k - e_k) / b_k$

si SN > 0 , alors $SL_k = SN$ sinon, $SL_k = 0$.

L'indicateur de surcharge local $SL_k$ est représentatif de la surcharge du relais $R_k$ par rapport au seuil de charge nominale $b_k$. Il est normalisé afin de pouvoir le comparer aux indicateurs des autres cellules.

Selon la Fig 12, dans une deuxième partie, le module 51 calcule pour chaque cellule $CE_k$, un indicateur de surcharge des cellules voisines à partir des indicateurs de surcharge locaux $SL_j$ des cellules voisines $CE_j$, à travers des comparateurs 515, multiplieurs 516 et additionneurs 517, selon la formule suivante :

$$WS_k(t) = \sum_{j \in V_k} \sigma_{k,j} * SUP_j$$

avec

si $SL_j > cws * WS_k (t-1)$, alors $SUP_j = SL_j$

si $SL_j < cws * WS_k (t-1)$, alors, $SUP_j = cws * WS_k (t-1)$

$V_k$ est l'ensemble des cellules voisines de la cellule $CE_k$, ici au nombre de 5 et associées aux indices j1 à j5 dans la Fig. 12. Lorsque cws = 0 , on obtient l'équation (15). Toutefois, pour favoriser dans le calcul de $WS_k$ les cellules les plus chargées, le facteur cws est pris différent de zéro en entrée d'un multiplieur 518, ce qui élimine de la somme des valeurs des indicateurs de surcharge $SL_j$ les plus faibles :

$$0 < cws < \sum_{j \in V_k} \sigma_{k,j}$$

Lorsque cws s'approche de la limite supérieure indiquée ci-dessus, $WS_k$ devient égal à l'indicateur de surcharge local $SL_j$ de la cellule voisine j la plus chargée.

L'indicateur de surcharge de cellules voisines $WS_k(t)$ est mémorisé en 519 afin d'intervenir ultérieurement dans le calcul de $WS_k (t+1)$.

Ainsi, en choisissant cws non nul, la valeur de l'indicateur $WS_k$ des cellules voisines des cellules les plus chargées est augmentée. D'après l'équation (18), la charge de ces cellules voisines est donc augmentée, et une partie de la charge des cellules les plus chargées est ainsi transférée vers leurs cellules voisines.

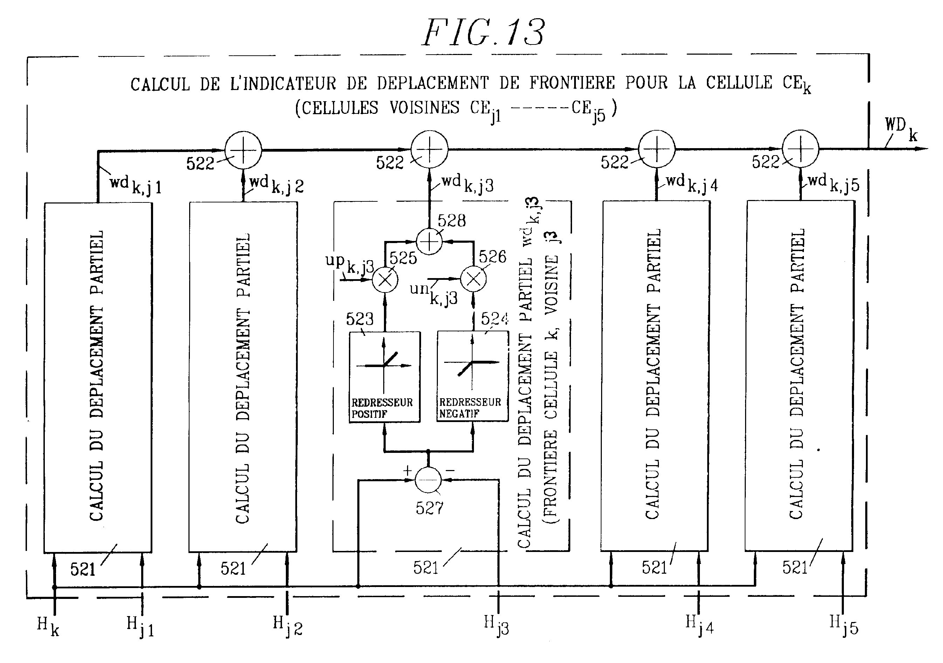

En référence à la Fig. 13, le module des indicateurs de déplacement de frontière 52 comprend des moyens pour calculer l'indicateur de déplacement des frontières pour la cellule $CE_k$ sous la forme de plusieurs circuits de calcul de déplacement partiel 521 et d'additionneurs 522.

Pour chaque cellule voisine $CE_j$ de la cellule $CE_k$, le circuit respectif 521 calcule un indicateur partiel de déplacement de frontière $wd_{k,j}$ selon les relations :

si $H_k > H_j$, $wd_{k,j} = up_{k,j} * (H_k - H_j)$

si $Hk < H_j$, $wd_{k,j} = un_{k,j} * (H_k - H_j)$

A cette fin, comme montré en détail dans le circuit 521 relatif à la cellule voisine $CE_{j3}$, un circuit 521 comprend deux ensembles série à redresseur respectivement positif 523 et négatif 524 et un multiplieur 525, 526 entre un soustracteur d'entrée 527 et un additionneur de sortie 528.

L'indicateur $WD_k$ est obtenu en sommant en 522 les indicateurs partiels de déplacement de frontière $wd_{k,j}$ sur l'ensemble des cellules voisines de $CE_k$ :

$$Wd_k = \sum_{j \in V_k} wd_{k,j}$$

Pour $up_{k,j} = un_{k,j}$, on obtient la formule (16).

Généralement, lorsque $H_k > H_j$, la cellule $CE_k$ est plus chargée que la cellule $CE_j$. Dans ce cas, l'indicateur partiel de déplacement $wd_{k,j}$ entre les cellules $CE_k$ et $CE_j$ est positif pour la cellule $CE_k$ entraînant une augmentation de la charge pour cette cellule, et négatif pour la cellule $CE_j$, entraînant une diminution de la charge pour cette cellule.

Ainsi, de préférence est imposée l'inégalité $un_{k,j} > up_{k,j}$, par exemple $un_{k,j} = 2 * up_{kj}$, dans le but de favoriser la diminution de charge de la cellule la plus chargée. Cette méthode permet une meilleure régulation de charge pour les cellules les plus chargées.

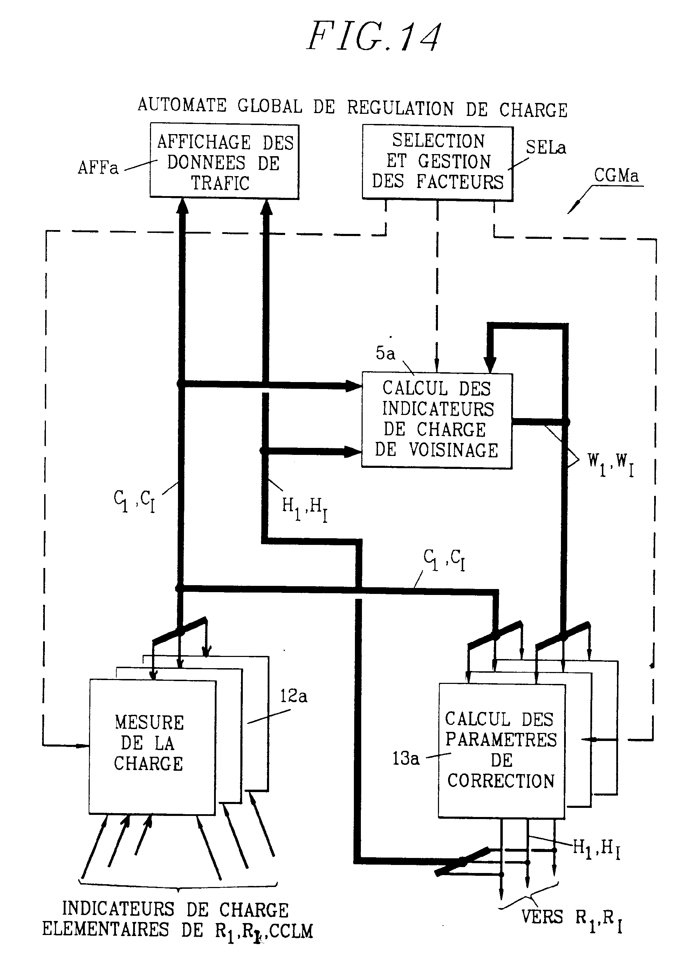

Selon un autre mode de réalisation de l'automate global de régulation de charge montré à la Fig. 14, tous les calculs des indicateurs de charge et de paramètres de correction sont centralisés dans un centre de gestion et de maintenance CGMa. Comme montré à la Fig. 10, on retrouve dans l'ensemble station de travail/moniteur ST/MO du centre CGMa :

- des moyens centralisés 5a pour calculer des indicateurs de charge de voisinage $W_1$ à $W_l$ à partir des indicateurs de charge $C_1$ à $C_l$ et des paramètres de correction $H_1$ à $H_l$ pour l'ensemble des cellules du réseau $CE_1$ à $CE_l$,

- des moyens centralisés AFFa pour afficher des données de trafic en fonction notamment des indica-

11

teurs de charge et des paramètres de correction de champ pour l'ensemble des cellules du réseau ; et

- des moyens centralisés SELa pour sélectionner et gérer des facteurs de l'automate tels que cws, $\sigma_{k,j}$, $b_k$, $up_{k,j}$, $un_{k,j}$, $b_k$, $a_k$, $c_k$, $Hmin_k$, $Hmax_k$, ca, cr pour chaque cellule $CE_k$ avec $1 \le k \le I$.

En outre, comparativement à la Fig. 7, dans le centre de gestion et de maintenance CGMa sont déportés :

- des moyens 12a pour mesurer la charge afin de produire les indicateurs de charge $C_1$ à $C_I$ ; les moyens 12a peuvent utiliser en plus , des indicateurs de charge élémentaires générés par des relais $R_1$ à $R_I$, et des indicateurs de charge élémentaires générés par des équipements centralisés tel que le centre de commutation et de localisation CCLM, comme par exemple le nombre d'inscriptions dans une zone de localisation ; et

- des moyens 13a pour calculer les paramètres de correction $H_1$ à $H_I$ à partir des indicateurs de charge et des indicateurs de charge du voisinage.

## Revendications

1. Procédé pour réguler la charge de stations fixes ($R_i$) dans un réseau de radiocommunication cellulaire où des stations mobiles (M) mesurent des champs radioélectriques ($E_k$) émis par les stations fixes, selon lequel relativement à une station fixe ($R_k$) associée à l'une des cellules du réseau,

   un paramètre dépendant du trafic écoulé de la station fixe et réévalué périodiquement est transmis vers les stations mobiles (M), et

   caractérisé en ce que ledit paramètre est un parametre de correction de champ ($H_k$) dependant d'un indicateur de charge ($C_k$) de la station fixe ($R_k$) et

   d'un indicateur de charge de voisinage ($W_k$) réévalué périodiquement, qui est une combinaison d'un indicateur de surcharge ($WS_k$) relatif à des stations fixes voisines de ladite station fixe et

   d'un indicateur de déplacement ($WD_k$) relatif à des frontières de champ entre les cellules correspondant aux stations voisines et la cellule ($CE_k$) de ladite station fixe ($R_k$),

   une frontière entre deux cellules ($CE_i$, $CE_j$) étant déterminée par une égalité de champs corrigés ($G_i = G_j$) correspondant auxdites deux cellules et étant déplacée en fonction des variations des paramètres de correction ($H_i$, $H_j$) desdites deux cellules, et en ce que

   dans chacune des stations mobiles le champ radioélectrique mesuré ($E_k$) correspondant à la station fixe ($R_k$) est corrigé par le paramètre de correction ($H_k$) en un champ corrigé ($G_k$), afin que la station mobile compare les champs corrigés correspondant aux stations fixes et sélectionne la station fixe correspondant au champ corrigé le plus élevé pour établir une radiocommunication.

2. Procédé conforme à la revendication 1, caractérisé en ce que l'indicateur de surcharge ($WS_k$) relatif auxdites stations fixes voisines dépend d'indicateurs de surcharge locaux ($SL_{j1}$ à $SL_{j5}$) relatifs respectivement auxdites stations voisines, l'indicateur de surcharge local ($SL_k$) d'une station fixe ($R_k$) étant fonction dudit indicateur de charge ($C_k$) de la station lorsque le paramètre de correction ($H_k$) de la station est égal à une valeur maximum ($Hmax_k$) et étant fonction dudit paramètre de correction ($H_k$) de la station et de l'indicateur de charge de voisinage ($W_k$) de la station lorsque le paramètre de correction est inférieur à ladite valeur maximum.

3. Procédé conforme à la revendication 2, caractérisé en ce que, lorsque le paramètre de correction ($H_k$) de la station est égal à la valeur maximum ($Hmax_k$), l'indicateur de surcharge local ($SL_k$) est égal à la différence entre l'indicateur de charge ($C_k$) et la somme d'un seuil de charge nominale ($b_k$) de la station et d'un seuil d'hystérésis ($e_k$) conditionnant une incrémentation positive/négative du paramètre de correction du champ.

4. Procédé conforme à la revendication 2 ou 3, caractérisé en ce que, lorsque le paramètre de correction ($H_k$) de la station est inférieur à ladite valeur maximum ($Hmax_k$), l'indicateur de surcharge local ($SL_k$) est égal à la somme de l'indicateur de charge de voisinage ($W_k$) et du produit du paramètre de correction ($H_k$) par un facteur de perte ($a_k$).

5. Procédé conforme à l'une quelconque des revendications 2 à 4, caractérisé en ce que l'indicateur de surcharge ($SL_k$) est normalisé par rapport à un seuil de charge nominale ($b_k$) de la station fixe ($R_k$).

6. Procédé conforme à l'une quelconque des revendications 2 à 5, caractérisée en ce que l'indicateur de surcharge ($WS_k$) de ladite station, de préférence pondéré par un facteur prédéterminé (cws), est comparé à chacun des indicateurs de surcharge locaux ($SL_{j1}$ à $SL_{j5}$) des cellules voisines afin de sommer les plus grands indicateurs ($SUP_{j1}$ à $SUP_{j5}$) issus des comparaisons, de préférence pondérés par des facteurs respectifs ($\sigma_{k,j1}$ à $\sigma_{k,j5}$), en ledit indicateur de surcharge ($WS_k$).

7. Procédé conforme à l'une quelconque des revendications 2 à 6, caractérisé en ce que l'indicateur de déplacement de frontière ($WD_k$) est égal à la somme d'indicateurs partiels de déplacement ($wd_{k,j1}$ à $wd_{k,j5}$) relatifs respectivement aux frontières de champ entre les cellules voisines et la cellule de ladite station fixe, un indicateur partiel de déplacement ($wd_{k,j3}$) d'une cellule voisine ($CE_{j3}$) étant égal à la somme des paramètres de correction ($H_k$, $H_{j3}$) de ladite cellule voisine et de la cellule de ladite station fixe ($R_k$).

8. Procédé conforme à la revendication 7, caractérisé en ce que ladite somme de paramètre de correction ($H_k$, $H_{j3}$) est pondérée par deux facteurs ($up_{k,j3}$, $un_{k,j3}$), de préférence plus petit que l'autre, respectivement lorsque ladite somme est positive et est négative.

9. Procédé conforme à l'une quelconque des revendications 1 à 8, caractérisé en ce que l'indicateur de charge de voisinage ($W_k$) de la station fixe ($R_k$) est déduit de la somme de l'indicateur de surcharge ($WS_k$) et de l'indicateur de déplacement de frontière ($WD_k$), du produit de ladite somme par un seuil de charge nominale ($b_k$) de ladite station fixe ($R_k$), et de l'addition dudit produit audit seuil de charge nominal.

10. Procédé conforme à l'une quelconque des revendications 1 à 9, caractérisé en ce que l'indicateur de charge ($C_k$) d'une station ($R_k$) dépend d'une combinaison linéaire (Cb) d'indicateurs de charge élémentaires tels que le nombre de demandes de canal radio en attente et le nombre de canaux radio occupés dans la station.

11. Procédé conforme à la revendication 10, caractérisé en ce que l'indicateur de charge ($C_k$) de la station fixe ($R_k$) est calculé en moyennant ladite combinaison linéaire (Cb) pendant une période prédéterminée ($T_2$), puis en subissant un filtrage récursif.

12. Procédé conforme à l'une quelconque des revendications 1 à 11, caractérisé en ce que l'indicateur de charge ($C_k$) depend de facteurs fixes choisis parmi un seuil de charge nominale ($b_k$), un facteur de perte ($a_k$), un seuil d'hystérésis ($e_k$) et des valeurs maximum et minimum ($Hmax_k$, $Hmin_k$) du paramètre de correction ($H_k$).

13. Procédé conforme à l'une quelconque des revendications 1 à 12, caractérisé en ce que le paramètre de correction de champ ($H_k$) d'une station fixe ($R_k$) est régulé périodiquement entre des valeurs maximum et minimum prédéterminées ($Hmax_k$, $Hmin_k$) par un incrément positif/négatif (inc) qui est déterminé par la comparaison de la différence (delta) entre l'indicateur de charge ($C_k$) et le paramètre de correction ($H_k(t-T_2)$) avec un seuil d'hystérésis ($=e_k$).

14. Procédé conforme à la revendication 13, caractérisé en ce que ladite différence (delta) consiste également à soustraire un seuil de charge nominale ($b_k$) à l'indicateur de charge ($C_k$).

15. Procédé conforme à la revendication 14, caractérisé en ce que dans le calcul de ladite différence (deltag), le seuil de charge nominale ($b_k$) est remplacé par l'indicateur de charge de voisinage ($W_k$).

16. Procédé conforme à la revendication 5 ou 6, caractérisé en ce que le paramètre de correction ($H_k(t - T_2)$) est multiplié par un facteur de perte ($a_k$) dans ladite différence (delta).

17. Procédé conforme à l'une quelconque des revendications 1 à 16, caractérisé en ce que le calcul du paramètre de correction de charge ($H_k$) d'une station fixe est effectué localement dans la station fixe ($R_k$).

18. Procédé conforme à l'une quelconque des revendications 1 à 17, caractérisé en ce que le calcul d'indicateur de charge de voisinage est effectué dans des moyens centralisés (CGM) reliés aux stations fixes ($R_1$ à $R_l$) du réseau cellulaires.

19. Procédé conforme à l'une quelconque des revendications 1 à 16, caractérisé en ce que les calculs (12a, 13a, 5a) du paramètre de correction de charge ($H_k$), de l'indicateur de charge ($C_k$) et de l'indicateur de charge de voisinage ($W_k$) de chacune desdites stations fixes ($R_1$ à $R_l$) sont effectués dans des moyens centralisés (CGMa) reliés aux stations fixes.

**Patentansprüche**

1. Verfahren zur Lastregelung von Feststationen ($R_i$) in einem Zellular-Funkkommunikationsnetzwerk, bei dem bewegliche Stationen (M) radioelektrische Felder ($E_k$), die von den Feststationen abgestrahlt werden, messen, wobei bezüglich einer Feststation ($R_k$), die mit einer der Zellen des Netzes verbunden ist, ein Parameter zu den beweglichen Stationen (M) übertragen wird, der vom von der Feststation abgehenden Verkehr abhängt und periodisch neu bestimmt wird, dadurch gekennzeichnet, daß dieser Parameter ein Korrekturparameter des Feldes ($H_k$) ist, der von einem Lastanzeiger ($C_k$) der Feststation ($R_k$) und einem Nachbarschaftslastanzeiger ($W_k$) abhängt, der periodisch neu bestimmt wird und eine Kombination ist aus einem Überlastanzeiger ($WS_k$) der benachbarten Feststationen zu der besagten Feststation und einem Verschiebungsanzeiger ($WD_k$) der Feldgrenzen zwischen zwischen den Zellen, die den benachbarten Stationen entsprechen, und der Zelle ($CE_k$) der besagten Feststation ($R_k$), wobei eine Grenze zwischen zwei Zellen ($CE_i$, $CE_j$) durch eine Gleichheit der korrigierten Felder ($G_i = G_j$), die den beiden Zellen entspricht, bestimmt und als Funktion der Veränderung der Korrekturparameter ($H_i$, $H_j$) dieser beiden Zellen verschoben wird,
und dadurch, daß in jeder beweglichen Station das gemessene radioelektrische Feld ($E_k$), das der Feststation ($R_k$) entspricht, durch den Korrekturparameter ($H_k$) zu einem berichtigten Feld ($G_k$) korrigiert wird, damit die bewegliche Station die den Feststationen entsprechenden korrigierten Felder vergleicht und diejenige Feststation auswählt, die dem größten korrigierten Feld entspricht, um eine Funkkommunikation herzustellen.

2. Verfahren nach Anspruch 1, dadurch gekennzeichnet, daß der Überlastanzeiger ($WS_k$) bezüglich der benachbarten Feststationen von lokalen Überlastanzeigern ($SL_{j1}$ bis $SL_{j5}$) der benachbarten Stationen abhängt, wobei der lokale Überlastanzeiger ($SL_k$) einer Feststation ($R_k$) eine Funktion des Lastanzeigers ($C_k$) der Station ist, wenn der Korrekturparameter ($H_k$) der Station gleich einem Maximalwert ($Hmax_k$) ist, und eine Funktion des Korrekturparameters ($H_k$) der Station und des Nachbarlastanzeigers ($W_k$) der Station ist, wenn der Korrekturparameter unterhalb des Maximalwertes liegt.

3. Verfahren nach Anspruch 2, dadurch gekennzeichnet, daß wenn der Korrekturparameter ($H_k$) der Station gleich dem Maximalwert ($Hmax_k$) ist, der lokale Überlastanzeiger ($SL_k$) gleich der Differenz zwischen dem Lastanzeiger ($C_k$) und der Summe einer nominalen Lastschwelle ($b_k$) der Station und einer Hysteresenschwelle ($e_k$) ist, die eine positive/negative Inkrementierung des Korrekturparameters des Feldes bedingt.

4. Verfahren nach Anspruch 2 oder 3, dadurch gekennzeichnet, daß wenn der Korrekturparameter ($H_k$) der Station unterhalb des Maximalwertes ($Hmax_k$) liegt, der lokale Überlastanzeiger ($SL_k$) gleich der Summe des Nachbarlastanzeigers ($W_k$) und des Produktes des Korrekturparameters ($H_k$) mit einem Verlustfaktor ($a_k$) ist.

5. Verfahren nach einem der Ansprüche 2 bis 4, dadurch gekennzeichnet, daß der Überlastanzeiger ($SL_k$) auf eine nominale Lastschwelle ($b_k$) der Feststation ($R_k$) genormt ist.

6. Verfahren nach einem der Ansprüche 2 bis 5, dadurch gekennzeichnet, daß der Überlastanzeiger ($WS_k$) der Station, der vorzugsweise mit einem vorgegebenen Faktor (cws) gewichtet ist, mit jedem der lokalen Überlastanzeiger ($SL_{j1}$ bis $SL_{j5}$) der Nachbarzellen verglichen wird, um die größten Anzeiger ($SUP_{j1}$ bis $SUP_{j5}$), die bei dem Vergleich ermittelt werden und vorzugsweise mit entsprechenden Faktoren ($\sigma_{k,j1}$ bis $\sigma_{k,j5}$) gewichtet sind, zu dem Überlastanzeiger ($WS_k$) hinzuzuaddieren.

7. Verfahren nach einem der Ansprüche 2 bis 6, dadurch gekennzeichnet, daß der Verschiebungsanzeiger der Grenze ($WD_k$) gleich der Summe von Teilverschiebungsanzeigern ($wd_{k,j1}$ bis $wd_{k,j5}$) bezüglich Feldgrenzen zwischen den benachbarten Zellen der Zelle der Feststation ist, wobei ein Teilverschiebungsanzeiger ($w_{dk,j3}$) einer Nachbarzelle ($CE_{j3}$) gleich der Summe der Korrekturparameter ($H_k$, $H_{j3}$) der Nachbarzelle und der Zelle der Feststation ($R_k$) ist.

8. Verfahren nach Anspruch 7, dadurch gekennzeichnet, daß die Summe der Korrekturparameter ($H_k$, $H_{j3}$)

jeweils mit zwei Faktoren ($up_{k,j3}$, $un_{k,j3}$), wobei der erste vorzugsweise viel kleiner ist als der zweite, gewichtet wird, wenn die Summe positiv oder negativ ist.

9. Verfahren nach einem der Ansprüche 1 bis 8, dadurch gekennzeichnet, daß der Nachbarlastanzeiger ($W_k$) der Feststation ($R_k$) von der Summe des Überlastanzeigers ($WS_k$) und des Grenzverschiebungsanzeigers ($WD_k$), dem Produkt dieser Summe mit einer nominalen Lastschwelle ($b_k$) der Feststation ($R_k$) und der Addition dieses Produktes zu der nominalen Lastschwelle abgeleitet wird.

10. Verfahren nach einem der Ansprüche 1 bis 9, dadurch gekennzeichnet, daß der Lastanzeiger ($C_k$) einer Feststation ($R_k$) von einer Linearkombination (Cb) elementarer Lastanzeiger, wie die Nachfragezahl des bereitstehenden Funkkanals und die Zahl der besetzten Funkkanäle der Station, abhängt.

11. Verfahren nach Anspruch 10, dadurch gekennzeichnet, daß der Lastanzeiger ($C_k$) der Feststation ($R_k$) durch die Mittelung der Linearkomination während einer vorgegebenen Periode berechnet wird und anschließend eine rekursive Filterung durchläuft.

12. Verfahren nach einem der Ansprüche 1 bis 11, dadurch gekennzeichnet, daß der Lastanzeiger ($C_k$) von festen Faktoren abhängt, die unter einer nominalen Lastschwelle ($b_k$), einem Verlustfaktor ($a_k$), einer Hystereseschwelle ($e_k$) und Maximal- und Minimalwerten ($Hmax_k$, $Hmin_k$) des Korrekturparameters ($H_k$) ausgewählt werden.

13. Verfahren nach einem der Ansprüche 1 bis 12, dadurch gekennzeichnet, daß der Korrekturparameter eines Feldes ($H_k$) einer Feststation ($R_k$) periodisch zwischen einem vorgegebenen Maximal- und Minimalwert ($Hmax_k$, $Hmin_k$) durch ein postives/negatives Inkrement (inc) verändert wird, das durch den Vergleich der Differenz (delta) zwischen dem Ladungsanzeiger ($C_k$) und dem Korrekturparameter ($H_k(t-T_2)$) mit einer Hystereseschwelle (= $e_k$) bestimmt wird.

14. Verfahren nach Anspruch 13, dadurch gekennzeichnet, daß die Differenz (delta) auch auf der Subtraktion einer nominalen Lastschwelle ($b_k$) vom Lastanzeiger ($C_k$) beruht.

15. Verfahren nach Anspruch 14, dadurch gekennzeichnet, daß beim Berechnen der Differenz (delta) die nominale Lastschwelle ($b_k$) durch den Nachbarschaftslastanzeiger ($W_k$) ersetzt wird.

16. Verfahren nach Anspruch 5 oder 6, dadurch gekennzeichnet, daß der Korrekturparameter ($H_k(t-T_2)$) mit einem Verlustfaktor ($a_k$) in dieser Differenz (delta) multipliziert wird.

17. Verfahren nach einem der Ansprüche 1 bis 16, dadurch gekennzeichnet, daß die Berechnung des Lastkorrekturparameters ($H_k$) einer Feststation lokal in der Feststation ($R_k$) durchgeführt wird.

18. Verfahren nach einem der Ansprüche 1 bis 17, dadurch gekennzeichnet, daß die Berechnung des Nachbarschaftslastanzeigers in zentralen Einrichtungen (CGM) durchgeführt wird, die mit den Feststationen ($R_1$ bis $R_l$) des Zellularnetzes verbunden sind.

19. Verfahren nach einem der Ansprüche 1 bis 16, dadurch gekennzeichnet, daß die Berechnungen (12a, 13a, 5a) des Lastkorrekturparameters ($H_k$), des Lastanzeigers ($C_k$) und des Nachbarschaftslastanzeigers ($W_k$) jeder der Feststationen ($R_1$ bis $R_l$) in den zentralen Einrichtungen (CGMa), die mit den Feststationen verbunden sind, durchgeführt wird.

## Claims

1. Method for regulating the load of fixed stations ($R_i$) in a cellular radio communication network where mobile stations (M) measure radio-electric fields ($E_k$) emitted by the fixed stations, according which,

   relating to a fixed station ($R_k$) associated with one of the cells in the network,

   a parameter depending on the traffic passing over the fixed station and periodically re-evaluated is transmitted to the mobile stations (M), and

   characterized in that said parameter is a field correction parameter ($H_k$) depending on a load indicator ($C_k$) of the fixed station ($R_k$) and of a periodically re-evaluated proximity load indicator ($W_k$) which

is a combination

of an overload indicator ($WS_k$) relating to fixed stations adjacent to said fixed station and

of a displacement indicator ($WD_k$) relating to field boundaries between the cells corresponding to the adjacent stations and the cell ($CE_k$) of said fixed station ($R_k$),

a boundary between two cells ($CE_i$, $CE_j$) being determined by an equality of corrected fields ($G_i = G_j$) corresponding to said two cells and being displaced as a function of the variations of the correction parameters ($H_i$, $H_j$) of said two cells, and in that

in each of the mobile stations the measured radio-electric field ($E_k$) corresponding to the fixed station ($R_k$) is corrected by the correction parameter ($H_k$) into a corrected field ($G_k$), so that the mobile station compares the corrected fields corresponding to the fixed stations and selects the fixed station corresponding to the highest corrected field to establish a radio communication.

2. Method according to claim 1, characterized in that the overload indicator ($WS_k$) relating to said adjacent fixed stations depends on local overload indicators ($SL_{j1}$ to $SL_{j5}$) relative respectively to said adjacent stations, the local overload indicator ($SL_k$) of a fixed station ($R_k$) being function of said load indicator ($C_k$) of the station when the correction parameter ($H_k$) of the station is equal to a maximum value ($Hmax_k$) and being function of said correction parameter ($H_k$) of the station and the proximity load indicator ($W_k$) of the station when the correction parameter is lower than said maximum value.

3. Method according to claim 2, characterized in that when the correction parameter ($H_k$) of the station is equal to the maximum value ($Hmax_k$), the local overload indicator ($SL_k$) is equal to the difference between the load indicator ($C_k$) and the sum of a nominal load threshold ($b_k$) of the station and a hysteresis threshold ($e_k$) that conditions a positive/negative incrementation of the field correction parameter.

4. Method according to claim 2 or 3, characterized in that when the correction parameter ($H_k$) of the station is less than said maximum value ($Hmax_k$), the local overload indicator ($SL_k$) is equal to the sum of the proximity load indicator ($W_k$) and the produce of the correction parameter ($H_k$) by a loss factor ($a_k$).

5. Method according to any one of claims 2 to 4, characterized in that the local overload indicator ($SL_k$) is normalized in relation to a nominal load threshold ($b_k$) of the fixed station ($R_k$).

6. Method according to any one of claims 2 to 5, characterized in that the overload indicator ($WS_k$) of said station, preferably weighted by a predetermined factor ($cws$), is compared with each of the local overload indicators ($SL_{j1}$ to $SL_{j5}$) of the adjacent cells thereby summing the greatest indicators ($SUP_{j1}$ to $SUP_{js}$) issued from comparaisons, preferably weighted by respective factors ($\sigma_{k,j1}$ to $\sigma_{k,j5}$), into said overload indicator ($WS_k$).

7. Method according to any one of claims 2 to 6, characterized in that the boundary displacement indicator ($WD_k$) is equal to the sum of partial displacement indicators ($wd_{k,j1}$ to $wd_{k,j5}$) relating respectively to field boundaries between the adjacent cells and the cell of said fixed station, a partial displacement indicator ($wd_{k,j3}$) of an adjacent cell ($CE_{j3}$) being equal to the sum of the correction parameters ($H_k$, $H_{j3}$) of said adjacent cell and the cell of said fixed station ($R_k$).

8. Method according to claim 7, characterized in that said correction parameter ($H_k$, $H_{j3}$) sum is weighted by two factors ($up_{k,j3}$, $un_{k,j3}$), preferably the one less that the other, respectively when said sum is positive and is negative.

9. Method according to any one of claims 1 to 8, characterized in that the proximity load indicator ($W_k$) of the fixed station ($R_k$) is derived from the sum of the overload indicator ($WS_k$) and the boundary displacement indicator ($WD_k$), from the product of said sum by a nominal load threshold ($b_k$) of said fixed station ($R_k$), and from the addition of said product to said nominal load threshold.

10. Method according to any one of claims 1 to 9, characterized in that the load indicator ($C_k$) of a fixed station ($R_k$) depends on a linear combination ($Cb$) of elementary load indicators such as the number of waiting radio channel requests and the number of busy radio channels in the station.

11. Method according to claim 10, characterized in that the load indicator ($C_k$) of the fixed station ($R_k$) is computed by averaging said linear combination ($Cb$) during a predetermined period ($T_2$), then by undergoing

a recursive filtering.

12. Method according to any one of claims 1 to 11, characterized in that the load indicator ($C_k$) depends on fixed factors chosen from amongst a nominal load threshold ($b_k$), a loss factor ($a_k$), a hysteresis threshold ($e_k$) and maximum and minimum values ($Hmax_k$, $Hmin_k$) of the correction parameter ($H_k$).

13. Method according to any one of claims 1 to 12, characterized in that the field correction parameter ($H_k$) of a fixed station ($R_k$) is regulated periodically between predetermined maximum and minimum values ($Hmax_k$, $Hmin_k$) by a positive/negative increment (inc) which is determined by the comparison of the difference (delta) between the load indicator ($C_k$) and the correction parameter ($H_k(t-T_2)$) with a hysteresis threshold ($e_k$).

14. Method according to claim 13, characterized in that said difference (delta) further consists in subtracting a nominal load threshold ($b_k$) from the load indicator ($C_k$).

15. Method according to claim 14, characterized in that in the computation of said difference (deltag), the nominal load threshold ($b_k$) is replaced by the proximity load indicator ($W_k$).

16. Method according to claim 5 or 6, characterized in that the correction parameter ($H_k(t-T_2)$) is multiplied by a loss factor ($a_k$) in said difference (delta).

17. Method according to any one of claims 1 to 16, characterized in that the computation of the load correction parameter ($H_k$) of a fixed station is made locally in the fixed station ($R_k$).

18. Method according to any one of claims 1 to 17, characterized in that the proximity load indicator computation is made in centralized facilities (CGM) linked to the fixed stations ($R_1$ to $R_l$) of the cellular network.

19. Method according to any one of claims 1 to 16, characterized in that the computations (12a, 13a, 5a) of the load correction parameter ($H_k$), of the load indicator ($C_k$) and of the proximity load indicator ($W_k$) of each of said fixed stations ($R_1$ to $R_l$) are made in centralized facilities (CGMa) linked to the fixed stations.

# FIG.1

CGM

CENTRE DE GESTION
ET DE MAINTENANCE

$R_1(CE_1)$

LS$_1$

STATION
RADIO

SR$_1$

UNITE DE
GESTION
DE RELAIS

UGR$_1$

RTC

M(FIG.5)

première
voie de
canal

$R_i(CE_i)$

LS$_i$

LS-MIC$_1$

CCLM

STATION
RADIO

SR$_i$

UNITE DE
GESTION
DE RELAIS

UGR$_i$ (FIG.2)

RTC

seconde
voie de
canal

LS-MIC$_i$

CENTRE DE
COMMUTATION
ET DE
LOCALISATION
DES MOBILES

LS-MIC$_I$

$R_I(CE_I)$

antenne

LS$_I$

RESEAU
TELEPHONIQUE
COMMUTE
(RTC)

STATION
RADIO

SR$_I$

UNITE DE
GESTION
DE RELAIS

UGR$_I$

RTC

18

# FIG.2

Vers CGM    TTY

LS$_i$
( 4 fils synchrone
à 4800b/s)

V24 à 1200b/s    UGR$_i$

UNITE DE GESTION
DE RELAIS

PROCESSEUR
D'EXPLOITATION    DISQUE

11

PROCESSEUR
MAITRE

1A (FIG.7)

PROCESSEUR
MAITRE

1B

2A

BRASSEUR

10A

20A

2B

BRASSEUR

10B

20B

GESTION DE
CANAUX RADIO

PROCESSEUR

MODEM

35

SIGNALEUR
MULTIFREQUENCE

34

ALARMES

33

INTERFACES
MIC 2Mbit/s

32

MODEM

31

EMETTEURS/
RECEPTEURS
RADIO    SR$_i$

RTC
et MIC−LS$_i$

## FIG.3

CENTRE DE GESTION ET
DE MAINTENANCE CGM

ST
STATION
DE
TRAVAIL

MO

ETHERNET

MF
MACHINE
FRONTALE
DE
COMMUNICATION

MF
MACHINE
FRONTALE
DE
COMMUNICATION

10 lignes synchrones
4 fils à 4800b/s

10 lignes synchrones
4 fils à 4800b/s

$LS_1$ à $LS_I$

## FIG.4

$FR_{ij}$ $(G_i = G_j)$

champ $E_i$

champ $E_j$

$\theta_j$

$d_j$

M

$CE_j$

$d_i$

$CE_i$

IN

$R_j$

(puissance $P_j$)
(correction $H_j$)

$\theta_i$

$d_i(IN)$

$R_i$

(puissance $P_i$)
(correction $H_i$)

$D_{ij}$

20

FIG.5

DUPLEXEUR — 41

RECEPTEUR — 42

MESUREUR DE CHAMP — 43

SYNTHETISEUR DE FREQUENCE — 44

CIRCUIT D'EMISSION — 47

MODEM — 45

UNITE CENTRALE DE TRAITEMENT — 46

COMPARAISON DES CANAUX $f_1$ à $f_I$

$G_i = E_i - H_i$

$E_i$

$H_i$

$f_i$

M — STATION MOBILE

40

# FIG.6 ·

```
                    ┌──────────┐
                    │ FACTEURS │
                    │  FIXES   │
                    └──────────┘
                         │
                         ▼
        ┌────────────────────────────────────────────────────┐
        │     ETABLISSEMENT DES PARAMETRES DE                 │
        │   CORRECTION DE CHAMP RADIOELECTRIQUE               │
        └────────────────────────────────────────────────────┘
```

$H_1$ à $H_I$

```
                $R_2$              $R_i$              $R_I$
        ┌─────────┐ ┌─────────┐   ┌─────────┐   ┌─────────┐
  $R_1$ │ RELAIS :│ │ RELAIS :│   │ RELAIS :│   │ RELAIS :│
        │ EMISSION│─│ EMISSION│───│ EMISSION│───│ EMISSION│
        │ BALISE  │ │ BALISE  │   │ BALISE  │   │ BALISE  │
        └─────────┘ └─────────┘   └─────────┘   └─────────┘
```

DIFFUSION DES
PARAMETRES DE
CORRECTION

CELLULES   $CE_1$   $CE_2$ --------- $CE_i$ ---------- $CE_I$

CHARGE
RADIO

ELABORATION
D'INDICATEURS
DE CHARGE
DANS RELAIS

```
        ┌─────────┐ ┌─────────┐   ┌─────────┐   ┌─────────┐
        │ RELAIS :│ │ RELAIS :│   │ RELAIS :│   │ RELAIS :│
        │ GESTION │ │ GESTION │───│ GESTION │───│ GESTION │
        │ CHARGE  │ │ CHARGE  │   │ CHARGE  │   │ CHARGE  │
        └─────────┘ └─────────┘   └─────────┘   └─────────┘
          $R_1$       $R_2$         $R_i$         $R_I$
```

ELABORATION
D'INDICATEURS
DE CHARGE
DANS SYSTEME
FIXE

```
        ┌────────────────────────────────────────────────────┐
        │     SYSTEME DE COMMUNICATION                        │
        │          GESTION CHARGE                             │
        └────────────────────────────────────────────────────┘
```

CGM + CCLM                              $C_1$ à $C_I$

# *FIG.7*

AUTOMATE LOCAL DE REGULATION DE CHARGE POUR LE RELAIS $R_k$

CGM

ST+MO

| AFFICHAGE DES DONNEES DE TRAFIC | SELECTION DES FACTEURS |

$UGR_k$

11 — PROCESSEUR D'EXPLOITATION

| PRELEVEMENT ECHANTILLONS | GESTION DES FACTEURS |

indicateurs de charge élémentaires

MESURE DE CHARGE DE TRAFIC

$C_k$     $H_k$     $b_k, a_k, e_k$  $Hmin_k, Hmax_k$

12(FIG.8)

1A,1B

CALCUL DE PARAMETRE DE CORRECTION DE CHAMP RADIOELECTRIQUE   13(FIG.9)

PROCESSEUR MAITRE

$H_k$

GESTION DE CANAUX RADIO

INSERTION DU PARAMETRE DE CORRECTION DANS DES MESSAGES

35   PROCESSEUR

messages

MODEM

MODULATION FFSK 1200b/s

signal bande de base

$SR_k$   EMETTEUR RADIO (MODULATION/AMPLIFICATION)

signal HF

ANTENNE

23

# *FIG. 8*

indicateurs de charge élémentaires

nombre de demandes
de canal radio en
attente

nombre de canaux
radio occupés

12

MESURE DE CHARGE

PRELEVEMENT
DES
INDICATEURS
DE CHARGE
DE TRAFIC

$T_1$

$T_1$

120

120

ca — 121

121 — cr

122

Cb

MOYENNAGE

123

ACC — RAZ

124

$T_2$

Cm

125

$cg = T_1 / T_2$

FILTRAGE — 128 — 127 — + Cmg

126

129 — $C_k$

cf

$C_k(t)$

# $FIG.9$

CALCUL DE PARAMETRE
DE CORRECTION DE
CHAMP RADIOELECTRIQUE

$C_k$

$b_k$

130

$a_k$

132

131

delta

INCREMENT

$+mu$

$-e$  0  $+e$

$-mu$

133

$e_k$

inc

134

135

LIMITEUR

$Hmax_k$

$H_k(t-T_2)+inc$

$Hmin_k$

136  $H_k$

$H_k$

13

# FIG.10

## AUTOMATE GLOBAL DE REGULATION DE CHARGE

CENTRE DE GESTION ET
DE MAINTENANCE CGM

SEL

SELECTION ET GESTION
DES FACTEURS

$c_{ws}, \sigma_{k,j}$
$b_k, up_{k,j}, un_{k,j}$

$a_k, e_k$
$Hmin_k, Hmax_k$

AFF

AFFICHAGE
DES
DONNEES
DE TRAFIC

5

CALCUL DES
INDICATEURS
DE CHARGE DE
VOISINAGE
(FIG.11)

$W_k$

ST,MO

$H_k$
$C_k$

MF

INTERFACE SYNCHRONE 4800 bit/s

$H_k$
$C_k$

$LS_k$

$W_k, a_k, e_k$
$Hmin_k, Hmax_k$

UGR$_k$(FIG.7)

PRELEVEMENT
ECHANTILLON

11

GESTION DES
PARAMETRES
AVEC $b_k \equiv W_k$

UGR$_1$ à UGR$_{k-1}$
UGR$_{k+1}$ à UGR$_I$

26

# FIG.11

$b_k, a_k, e_k$
$Hmin_k, Hmax_k$
$cws, \sigma_{k,j}$

$W_k$

$C_1$
$C_k$
$C_I$

CALCUL D'INDICATEURS DE
SURCHARGE DE CELLULES
VOISINES (FIG.12)

$WS_1$
$WS_k$
$WS_I$

51

$b_k$

551        552        553

COMBINAISON DES
INDICATEURS

$H_1$
$H_k$
$H_I$

$^{up}_{k,j}, ^{un}_{k,j}$

52

CALCUL D'INDICATEURS
DE DEPLACEMENT DE
FRONTIERE   (FIG.13)

$WD_1$
$WD_k$
$WD_I$

$W_1$
$W_k$
$W_I$

53

MODULE DE CALCUL DES INDICATEURS DE CHARGE DE VOISINAGE

13

EP 0 466 543 B1

*FIG.12*

MODULE DE CALCUL D'INDICATEUR DE
SURCHARGE DE CELLULES VOISINES
POUR LA CELLULE CE$_k$

# FIG.13

CALCUL DE L'INDICATEUR DE DEPLACEMENT DE FRONTIERE POUR LA CELLULE $CE_k$
(CELLULES VOISINES $CE_{j1}$ ------- $CE_{j5}$ )

CALCUL DU DEPLACEMENT PARTIEL

CALCUL DU DEPLACEMENT PARTIEL

REDRESSEUR POSITIF

REDRESSEUR NEGATIF

CALCUL DU DEPLACEMENT PARTIEL $wd_{k,j3}$
(FRONTIERE CELLULE k, VOISINE j3)

CALCUL DU DEPLACEMENT PARTIEL

CALCUL DU DEPLACEMENT PARTIEL

# *FIG.14*

AUTOMATE GLOBAL DE REGULATION DE CHARGE

AFFa — AFFICHAGE DES DONNEES DE TRAFIC

SELECTION ET GESTION DES FACTEURS — SELa

CGMa

5a — CALCUL DES INDICATEURS DE CHARGE DE VOISINAGE

$W_1, W_I$

$C_1, C_I$

$H_1, H_I$

$C_1, C_I$

MESURE DE LA CHARGE — 12a

CALCUL DES PARAMETRES DE CORRECTION — 13a

$H_1, H_I$

INDICATEURS DE CHARGE ELEMENTAIRES DE $R_1, R_I$, CCLM

VERS $R_1, R_I$